# EUROPÄISCHE PATENTSCHRIFT

(11) **EP 3 596 786 B1**
(45) Veröffentlichungstag und Bekanntmachung des Hinweises auf die Patenterteilung: **04.05.2022**
(21) Anmeldenummer: 18712836.8
(22) Anmeldetag: 14.03.2018
(51) Int. Cl.: H01R 13/58, F16G 13/16, H02G 3/22, H02G 11/00, H02G 15/007

(54) **ZUGENTLASTUNG, ENDBEFESTIGUNGSTEIL MIT ZUGENTLASTUNG UND KLEMMTEIL HIERFÜR**
STRAIN RELIEF, END FIXING PART WITH STRAIN RELIEF AND ASSOCIATED CLAMPING PART
DÉCHARGE DE TRACTION, PIÈCE DE FIXATION D'EXTRÉMITÉ AVEC DÉCHARGE DE TRACTION ET ÉLÉMENT DE SERRAGE CORRESPONDANT

(30) Priorität: 14.03.2017 DE 202017101483 U
(43) Veröffentlichungstag der Anmeldung: 22.01.2020
(73) Patentinhaber: Igus GmbH, 51147 Köln (DE)
(72) Erfinder: HERMEY, Andreas, 53773 Hennef (DE); STEEGER, Ralf, 53797 Lohmar (DE); JAEKER, Thilo-Alexander, 53757 Sankt Augustin (DE); YILMAZ, Bilal, 50739 Köln (DE)
(74) Vertreter: Lippert Stachow Patentanwälte Rechtsanwälte
(86) Internationale Anmeldenummer: PCT/EP2018/056464
(87) Internationale Veröffentlichungsnummer: WO 2018/167184

(56) Entgegenhaltungen:
- WO-A1-99/52191
- DE-A1- 2 417 353
- DE-U1- 7 818 648
- DE-U1- 29 618 513
- DE-U1-202014 008 413

## Beschreibung

Die Erfindung betrifft ein Klemmteil für eine Klemmvorrichtung einer Zugentlastung für Versorgungsleitungen einer Versorgungsleitungseinrichtung, insbesondere einer Energieführungskette, wobei die Zugentlastung zur Durchführung der Versorgungsleitungen in einer Längsrichtung senkrecht oder etwa senkrecht zur Klemmrichtung ausgelegt ist, wobei das Klemmteil blockartig ist und eine als Klemmfläche ausgebildete Seitenfläche zum Einklemmen der Versorgungsleitungen gegen eine weitere Klemmfläche der Klemmvorrichtung aufweist. Die Erfindung betrifft ferner ein Endbefestigungsteil mit einer Zugentlastung.

Solche Zugentlastungen dienen allgemein dazu, bewegliche Leitungen, z.B. in einer Energieführungskette geführte Leitungen, an Endpunkten festzulegen um einen zwischenliegenden Bereich von Zugkräften zu entlasten.

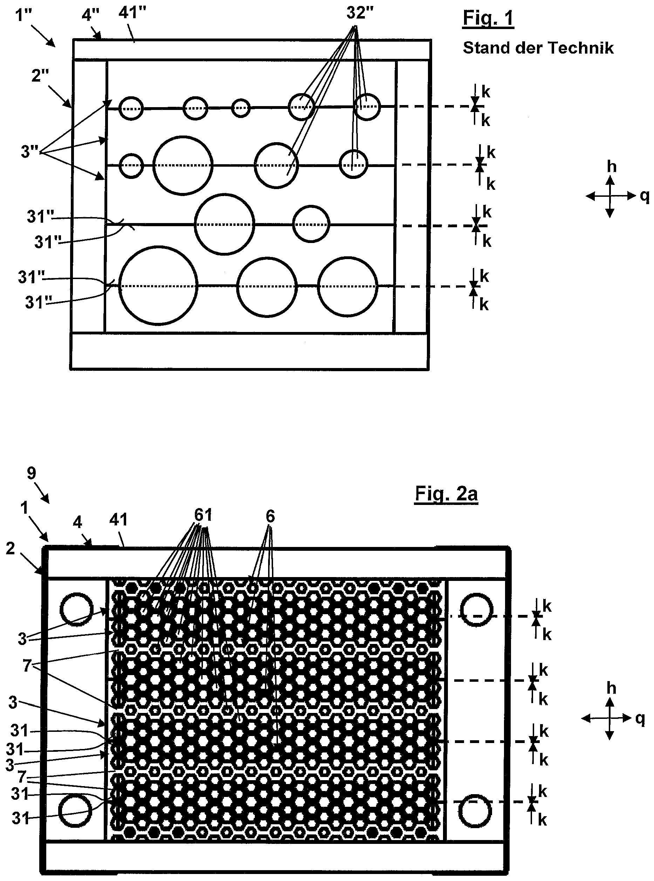

Eine entsprechende Zugentlastung wird in dem Katalog der Anmelderin "igus Katalog e-ketten und -systeme 2015", Seite 1175, offenbart, wobei die Zugentlastung schematisch in FIG. 1 dieser Anmeldung wiedergegeben ist. Die Zugentlastung weist hier mehrere gattungsgemäße Klemmteile auf, zwischen denen die Versorgungsleitungen eingeklemmt werden. In den Klemmflächen der Klemmteile sind Aufnahmen in Form von Aufnahmerinnen eingearbeitet, die jeweils aufwendig einer ganz bestimmten Versorgungsleitung angepasst sind. Es müssen die Versorgungsleitungen einzeln und nacheinander jeweils in die für sie vorgesehene Aufnahmerinne eingelegt werden. Nachteilig sind die aufwendige Sonderfertigung, die durch eine notwendige Anpassung der der Klemmteile der Zugentlastung an die von der Kundenseite gewünschten Versorgungsleitungen bedingt wird, und ferner die passende Montage der Versorgungsleitungen in die Zugentlastung.

Ferner ist aus DE 203 05 479 U1 eine Zugentlastung mit einem Zugentlastungselement bekannt, an dem die Versorgungsleitungen beispielsweise über Kabelbinder festgelegt werden.

In DE 20 2009 005 647 U1 ist eine Zugentlastung für mehrere Versorgungsleitungen offenbart, wobei dieselben jeweils einzeln über Bügelschellen und Pressbacken in der Zugentlastung lagefixiert werden.

Weitere Zugentlastungen, speziell für Energieführungsketten sind aus DE 2006 007 155 U1 und DE 2014 008 413 U1 bekannt. Beide schlagen als Klemmteile Elemente bzw. Unterlagen vor, die aus einem weichelastischen Material bestehen, z.B. aus Vulkollan, Schaumstoff oder Moosgummi. Diese Klemmteile haben eine monolithische plattenartige Bauweise - ähnlich der im o.g. Katalog - und können ggf. auch an einer Klemmfläche etwa halbzylindrische Ausnehmungen für die aufzunehmenden Leitungen aufweisen, die jeweils passend zum Leitungsquerschnitt maßgefertigt sind (vgl. FIG. 1). Auch diese Lösungen sind nur beschränkt bzw. mit besonderem Aufwand geeignet für hinsichtlich Durchmesser und/oder Anzahl variierende Versorgungsleitungen.

Zur besseren Anpassung an die Anzahl und unterschiedliche Durchmesser der Leitungen wurde in DE 24 17 353 vorgeschlagen, eine elastisch deformierbare Klemmlippe aus Schaumstoff einzusetzen, die senkrecht zur Zugentlastungsrichtung ein spezielles Querschnittsprofil, z.B. ein Ω-Profil aufweist.

DE 78 18 648 U1 beschreibt eine Kabelhalterung mit Zugentlastung, die Klemmstücke mit einem Federelement umfasst, wobei das Federelement die Klemmfläche des Klemmstücks gegen das Kabel drückt. Das Federelement nach DE 78 18 648 U1 ist als ein elastischer Ringkörper ausgebildet.

Eine Aufgabe der Erfindung ist, ein gattungsgemäßes Klemmteil für eine Zugentlastung bzw. ein Endbefestigungsteil mit der Zugentlastung bereitzustellen, die mit weniger Aufwand herstellbar und hinsichtlich der festzulegenden Versorgungsleitungen universeller einsetzbar ist.

Die gestellte Aufgabe wird erfindungsgemäß durch die Merkmale des Anspruchs 1 gelöst. Vorteilhafte Weiterbildungen werden in den Unteransprüchen beschrieben.

Die gestellte Aufgabe wird bereits dadurch gelöst, dass die Klemmfläche zumindest in einem zur Einklemmung der Versorgungsleitungen vorgesehenen Klemmabschnitt durch eine elastische Wandung gebildet wird, wobei die elastische Wandung auf der der Klemmfläche abgewandten Seite eine Hohlraumstruktur begrenzt, welche sich durch das Klemmteil erstreckt, insbesondere in oder etwa in Längsrichtung.

Da die elastische Wandung mit der Klemmfläche die sich durch das Klemmteil erstreckende Hohlraumstruktur begrenzt, kann die elastische Wandung mit dem Einklemmen der Versorgungsleitung bzw. Versorgungsleitungen in einen Hohlraum gedrückt werden. Die elastische Wandung erzeugt in Zusammenwirkung mit der Hohlraumstruktur eine ausreichende Klemmwirkung.

Die elastische Wandung mit der Klemmfläche bildet eine äußere Wandung des Klemmteils. Die Hohlraumstruktur kann insbesondere durch eine Anzahl innerer Wandungen gebildet sein. Die Hohlraumstruktur kann z.B. kanalartig durchgehende Öffnungen umfassen und/oder einer Wabenstruktur ähnlich geformt sein.

Die elastische äußere Wandung kann zum Einklemmen der Versorgungsleitungen gegen Klemmrichtung in die Hohlraumstruktur hinein elastisch aufweitbar ausgebildet sein. Mit der Einklemmung der Versorgungsleitungen drücken dieselben die elastisch aufweitbare äußere Wandung in die z.B. kanalartigen Freiräume der Hohlraumstruktur. Dadurch kann eine auf die Versorgungsleitungen wirkende definierte Rückstellkraft erzeugt werden, die dazu ausgelegt ist, die Versorgungsleitungen ortsfest in der Zugentlastung zu halten. Vorzugsweise sind die Wandstärke der äußeren Wandung und/oder der inneren Wandungen der Hohlraumstruktur so bemessen, dass die Rückstellkraft einen Anpressdruck auf die Versorgungsleitungen erzeugt, der groß genug ist, die Versorgungsleitungen ortsfest in der Zugentlastung zu halten, ohne die Versorgungsleitungen insbesondere hinsichtlich ihrer Funktionstüchtigkeit zu beeinträchtigen.

Durch Verformen der elastischen Wandung mit der Klemmfläche kann beim Einklemmen jeweils ein Aufnahmeraum für die Versorgungsleitung gebildet werden, der sich an die Versorgungsleitung anschmiegt bzw. anpasst. Dieser Aufnahmeraum wird gegen Klemmrichtung von der in den Hohlraum gedrückten elastischen äußeren Wandung begrenzt. Insbesondere passt sich die elastische durch die elastische Verformung Wandung mit der Klemmfläche während des Festlegens der Versorgungsleitung bzw. Versorgungsleitungen an dieselbe bzw. dieselben an. Damit können Versorgungsleitungen unterschiedlichen Durchmessers eingeklemmt werden, ohne dass eine nachträgliche Bearbeitung des Klemmteils erfolgt. Die Zugentlastung ist somit hinsichtlich der Leitungsdurchmesser über einen weiten Durchmesserbereich universell einsetzbar. Montagefreundlich müssen die Versorgungsleitung bzw. Versorgungsleitungen jeweils nicht, wie im nächstliegenden Stand der Technik (FIG.1), zwingend an einer bestimmten eigens an die jeweilige Versorgungsleitung angepassten Stelle der Klemmfläche eingesetzt werden. Es ist somit auch keine montageplanabhängige Anpassung bzw. Herstellung des Klemmteils nötig.

Über die Auslegung bzw. geometrische Gestaltung der Hohlraumstruktur können mechanische Eigenschaften des Klemmteils, wie Nachgiebigkeit der Klemmfläche und des Klemmteils selbst, sowie Abstützung der Klemmfläche gezielt eingestellt werden. Damit ist die Zugentlastung hinsichtlich der festzulegenden Versorgungsleitungen auch gezielt mit Blick auf eine anwendungsabhängige Gruppierung von festzulegenden Versorgungsleitungen vielseitig einsetzbar.

Vorzugsweise erfolgt eine elastische Verformung in Form einer Aufweitung und/oder Stauchung der flexiblen Wandung dergestalt, dass sich die Wandung zumindest teilweise an die Außenkontur der Versorgungsleitungen flächig anlegt. Damit kann die Haftreibung zwischen der oder den Versorgungsleitungen und Wandung erhöht sowie die Einkopplung der elastischen Rückstellkraft in die Versorgungsleitung verbessert werden. Insofern kann die elastische Wandung als flexible Wandung, insbesondere auch als flexibel aufweitbare und/oder flexibel stauchbare Wandung, beschrieben werden.

In einer Klemmlage ist bzw. sind die Versorgungsleitung(en) über einen Längsabschnitt gegen eine weitere Klemmfläche der Klemmvorrichtung gepresst eingeklemmt angeordnet. Die weitere Klemmfläche kann eine Gegenklemmfläche oder, allgemein, ein Widerlager zu der als Klemmfläche ausgebildeten Wandung bzw. Seitenfläche des blockartigen Klemmteils bilden.

Die weitere Klemmfläche kann aber insbesondere eine elastische Wandung an der Außenseite eines weiteren baugleichen Klemmteils mit der erfindungsgemäßen Hohlraumstruktur sein.

Insbesondere sind die elastische Rückstellkraft und damit die Klemmkraft im Rahmen der Herstellung gezielt einstellbar. Dies kann beispielsweise über die Ausbildung der Hohlraumstruktur und/oder über die Ausbildung der elastischen Wandung, insbesondere über deren Wandstärke und/oder Flexibilität erfolgen. Damit kann die Zugentlastung einfach beispielsweise für bestimmte Arten und Größen von Versorgungsleitung kundenspezifisch ausgelegt werden. Andererseits kann die Zugentlastung insbesondere über die Auslegung der Hohlraumstruktur so konfiguriert werden, dass sie universell für eine Vielzahl unterschiedlicher Durchmesser von Versorgungsleitungen eingesetzt werden kann. Die gewünschte Flexibilität, insbesondere Elastizität, in Verbindung mit geeigneter Haftreibung lässt sich unter anderem auch durch geeignete Materialwahl erzielen. Besonders bevorzugt sind thermoplastische Elastomere.

Die Hohlraumstruktur erstreckt sich kanalartig durch das gesamte Klemmteil. Kanalartig bedeutet hier, dass die Hohlraumstruktur mehrere bis zu einer Vielzahl von Kanälen aufweisen, die jeweils in Längsrichtung beiderseitig nach außen geöffnet, aber seitlich, d.h. quer zur Längsrichtung, nach außen hin vorzugsweise vollständig geschlossen sind. Insbesondere können die Kanäle parallel zueinander und in Längsrichtung verlaufend angeordnet sein. Die Längsrichtung bezieht sich dabei auf die Längsrichtung der zu klemmenden Leitungen.

Erfindungsgemäß ist die Hohlraumstruktur durch mehrere in Längsrichtung verlaufende Durchgangsöffnungen definiert, von denen zumindest einige von der elastischen Wandung mit der Klemmfläche begrenzt werden. Dabei kann diese Wandung gegen Klemmrichtung von weiteren inneren Wandungen, welche die Durchgangsöffnungen bilden, abgestützt bzw. gezielt versteift werden.

Mit der Klemmung der Versorgungsleitungen zwischen die Klemmflächen in Klemmrichtung wird die elastische Wandung gegen Klemmrichtung in die Hohlraumstruktur gedrückt, wodurch sie sich unter anderem selbst und auch die Hohlraumstruktur entsprechend elastisch verformt. Damit kann z.B. eine Art Federsystem mit der äußeren Wandung, ähnlich einer beiderseitig festgelegten Blattfeder, bereitgestellt werden, die in Einsatzlage eine elastische Rückstellkraft auf die Versorgungsleitung bzw. die Versorgungsleitungen ausübt, durch deren Einklemmung sie aufgeweitet wurde. Hieraus können, wie weiter unten detaillierter gezeigt, über konstruktive Maßnahmen, wie Anzahl, Anordnung und Ausbildung der Durchgangsöffnungen bzw. inneren Wandungen oder Wandstärke der Wandung(en), und/oder werkstoffkundliche Maßnahmen, wie Elastizität der Wandung, gezielt bestimmte Rückstellkräfte voreingestellt werden und die Eignung der Zugentlastung beispielsweise für unterschiedliche Durchmesser von Versorgungsleitungen, unterschiedliche Arten von Versorgungsleitungen und/oder für Versorgungsleitungen mit unterschiedlichen Querschnitten ermöglicht werden.

Vorzugsweise weisen die Durchgangsöffnungen über ihre gesamte Länge einen konstanten Querschnitt auf. Insbesondere kann die Klemmfläche durch die Wandung von aneinander angrenzenden Durchgangsöffnungen bzw. mit zwischenliegenden inneren Wandungen gebildet werden. Ferner kann die Klemmfläche im unbelasteten Zustand zumindest im Wesentlichen ungekrümmt ausgebildet sein.

Die Durchgangsöffnungen können über elastische Wandungen vorzugsweise unmittelbar aneinander angrenzend angeordnet sein, d.h. die Durchgangsöffnungen sind durch weitere innere Wandungen begrenzt. Damit kann die elastische Verformung einer Durchgangsöffnung z.T. auf benachbarte Durchgangsöffnungen übertragen werden, indem die inneren elastischen Wandungen, über die benachbarte Durchgangsöffnungen aneinander angrenzen, ebenfalls elastisch verformt werden.

Vorteilhaft kann zumindest der überwiegende Teil der Klemmfläche oder die gesamte Klemmfläche durch die Wandung von aneinander angrenzenden Durchgangsöffnungen gebildet werden, d.h. eine durchgehende äußere Wandung begrenzt eine Anzahl Durchgangsöffnungen leitungsseitig nach außen. Damit kann die gesamte Klemmfläche über ihre laterale Erstreckung insbesondere hinsichtlich ihrer elastischen Aufweitung spezifisch voreingestellt werden.

Fertigungstechnisch einfach können die Wandstärke der zumindest den Klemmabschnitt der Klemmfläche bildenden Wandung und die Wandstärke der Wandungen, über die Durchgangsöffnungen aneinander angrenzen, d.h. der inneren Wandungen, zumindest etwa oder genau gleich groß sein.

Insbesondere kann die Wandstärke der elastischen Wandung vorzugsweise kleiner, insbesondere um ein Mehrfaches kleiner als ein mittlerer Durchmesser der Durchgangsöffnungen ausgelegt sein.

In einer Weiterbildung der Zugentlastung kann die Wandstärke der elastischen Wandung bzw. der elastischen Wandungen kleiner/gleich als ein Drittel des durchschnittlichen Durchmessers, kleiner/gleich als ein Achtel des durchschnittlichen Durchmessers oder kleiner/gleich als ein Zehntel jeweils des durchschnittlichen Durchmessers der aneinander grenzenden Durchgangsöffnungen sein.

Der mittlere Durchmesser bezieht sich auf den Querschnitt einer bestimmten Durchgangsöffnung. Ein mittlerer Durchmesser kann über den Mittelwert mehrerer Durchmesser unterschiedlicher Orientierung senkrecht zur Längsrichtung ermittelt werden, wobei die Durchmesser jeweils beispielsweise durch einen Flächenschwerpunkt des Querschnitts gehen. Je kleiner das Verhältnis Wandstärke / mittlerer Durchmesser der Durchgangsöffnungen ist, desto federelastisch weicher sind Federsystem und Klemmblock.

Die der Klemmfläche zugeordneten Durchgangsöffnungen können kongruent oder zumindest ähnlich ausgebildet sein. Insbesondere können die Durchgangsöffnungen eine gleiche Größe, einen gleichen Querschnitt und/oder eine gleiche Ausrichtung aufweisen. Damit können die Durchgangsöffnungen kleine Einheitszellen bilden, die additiv zum Verformungsverhalten beitragen. Insbesondere können die Durchgangsöffnungen durch ein Gitter aus sich in Längsrichtung erstreckenden zumindest ähnlichen elastischen Wandungen gebildet sein. Vorteilhaft können die Durchgangsöffnungen kanalartig in Längsrichtung verlaufen. Die Durchgangsöffnungen können über die Länge bzw. parallel zur Längsrichtung jeweils einen konstanten Querschnitt aufweisen. In dem Gitter können die inneren Wandungen untereinander und mit der die Klemmfläche aufweisenden elastischen äußeren Wandung verbunden sind. Insbesondere können die elastischen Wandungen an sich zumindest etwa in Längsrichtung erstreckenden Verbindungslinien zusammenlaufend miteinander verbunden sein. Die Verbindungslinien können Knotenlinien des Gitters sein, die im Querschnitt als Knotenpunkte erscheinen. Dabei kann zumindest der überwiegende Teil der elastischen Wandlungen des zumindest einen Klemmteils eine gleiche Wandstärke aufweisen.

Die Gitterstruktur aus den Wandungen kann wabenartig sein. Die Gitterstruktur aus den Wandungen ist vorzugsweise regelmäßig, insbesondere gleichmäßig ausgeführt. Damit kann die die Klemmfläche aufweisende elastische Wandung über ihre laterale Erstreckung quer zur Längsrichtung ein gleiches oder zumindest ähnliches Verformungsverhalten aufweisen. Dies begünstigt eine hinsichtlich der Versorgungsleitungen universelle Verwendung der Zugentlastung. Auf der Grundlage der Gitterstruktur kann das Verformungsverhalten leichter berechnet und geplant werden. Damit können die unterschiedlichen Schritte, z.B. auch bei einem additiven Fertigungsverfahren, wie Konfigurieren und Konfektionierung der Zugentlastung mit den Versorgungsleitungen, leichter automatisiert werden.

In einer Weiterbildung der Zugentlastung, insbesondere bei gleichmäßiger Hohlraum- bzw. Gitterstruktur, können die Durchgangsöffnungen jeweils die Form eines geraden Prismas mit einer polygonalen Grundfläche aus vorzugsweise gleichen Seiten aufweisen. Alternativ können die Durchgangsöffnungen jeweils die Form eines geraden Zylinders mit einer runden Grundfläche insbesondere als Teilzylinder mit, bezüglich des Querschnitts, geschlossenem Rund oder Halbkreisen aufweisen. Der gerade Zylinder kann ein Kreiszylinder, Zylinder mit ovaler Grundfläche oder z.B. ein Zylinder mit einer länglichrunden Grundfläche sein. Es versteht sich, dass die Durchgangsöffnungen nicht zwingend alle gleich ausgebildet sein müssen. Es hat sich jedoch, auch wegen der gleichmäßigeren Kraftübertragung und Verformung, als vorteilhaft erwiesen, die Durchgangsöffnungen regelmäßig bzw. in einer bestimmten "Musterung" anzuordnen, in der sie und/oder eventuelle "Leerstellen", d.h. Stellen ohne Durchgangsöffnung, einen zumindest ähnlichem Querschnitt aufweisen.

In einer Ausführungsform der Zugentlastung können die Durchgangsöffnungen im Querschnitt die Form eines geraden Prismas mit einer dreieckigen Grundfläche aufweisen. Geometrisch bedingt weist ein derartiges gerades Prismas mit dreieckiger Grundfläche eine Keilform mit linienförmigen Scheitelkanten auf, die in der dreieckigen Grundfläche jeweils eine Spitze des Dreiecks bildet. Diese Keilform ist zur Übertragung von Kräften besonders günstig und wirkt einer unerwünschten Verwindung des Klemmteils beispielsweise infolge einer asymmetrischen Verteilung der Versorgungsleitungen in der Zugentlastung entgegen.

Insbesondere kann das Dreieck der Grundfläche bei einer Gruppe Durchgangsöffnungen mit einer Spitze gegen Klemmrichtung und bei einer anderen Gruppe in Klemmrichtung weisend angeordnet sein. Vorteilhaft können die Durchgangöffnungen der einen Gruppe bezüglich einer Querrichtung senkrecht zur Längsrichtung und Klemmrichtung alternierend zu den Durchgangsöffnungen der anderen Gruppe und bezüglich der Querrichtung in einer Reihe angeordnet sein.

Insbesondere können die Durchgangsöffnungen in Querrichtung fluchtend zueinander angeordnet sein.

Wenn, wie oben beschrieben, die Durchgangsöffnungen aneinander angrenzen, können sie mit ihren elastischen Wandungen ein gleichmäßiges elastisches Gitter aus kraftmechanisch stabilen z.B. dreieckigen Gittereinheiten ausbilden, in dem Verformungskräfte weitergegeben werden. Insbesondere dann, wenn das Dreieck gleichseitig ist, kann die Kräfteverteilung und der Verformungsverlauf in dem elastischen Gitter beispielsweise nach der Methode der finiten Elemente zumindest grob abgeschätzt und somit leichter vorbestimmt werden. Dies kann auch die elastische Wandung mit der Klemmfläche betreffen.

Insbesondere können die Durchgangsöffnungen der Gruppe mit der gegen Klemmrichtung weisenden Spitze von der elastischen Wandung mit der Klemmfläche beziehungsweise einem entsprechenden Abschnitt dieser Klemmfläche begrenzt werden.

Dies hat zur Folge, dass die innere Wandungen der Durchgangsöffnungen beider Gruppen an der elastischen Wandung mit der Klemmfläche angreifen. Hierbei werden die Durchgangsöffnungen mit der gegen Klemmrichtung weisenden linienhaften Scheitelkante jeweils an ihrer der Scheitelkante gegenüberliegenden Seitenfläche von der elastischen Wandung mit der Klemmfläche begrenzt. Ferner greifen die inneren Wandungen der Durchgangsöffnungen mit der in Klemmrichtung weisenden linienhaften Scheitelkante mit dieser Scheitelkante an der elastischen Wandung mit der Klemmfläche an. Damit kann die Klemmfläche an diesen Stellen linienhaft abgestützt und hierüber versteift beziehungsweise verstärkt werden.

Die zur Querrichtung fluchtende Anordnung der Durchgangsöffnungen bzw. innere Wandungen impliziert, dass die Durchgangsöffnungen mit der in Klemmrichtung weisenden Scheitelkante jeweils an ihrer dieser Scheitelkante gegenüberliegenden Seitenfläche eine sich in Querrichtung und Längsrichtung erstreckende elastische Wandung ausbilden können. An dieser Wandung können dann die Durchgangsöffnungen jeweils mit ihrer gegen Klemmrichtung weisenden Scheitelkante angreifen, wodurch diese stabilisiert und versteift werden kann. Zur Ausbildung dieser elastischen Wandung kann die Gitterstruktur aus elastischen Wandungen gegen Klemmrichtung über die Anordnung der zur Querrichtung fluchtenden Durchgangsöffnungen weitergeführt werden. Vorzugsweise wird die Gitterstruktur unverändert weitergeführt. Insbesondere ist die Gitterstruktur eines Klemmteils einheitlich, vorzugsweise gleichmäßig im Querschnitt senkrecht zur Längsrichtung.

Die Abschnitte der elastischen Wandung der Klemmfläche, die jeweils zwischen den Orten, an denen die Durchgangsöffnungen der Gruppe mit der in Klemmrichtung weisenden Scheitelkante mit derselben linienhaft mit der elastischen Wandung verbunden sind, können unter Ausbildung einer Aufnahmerille sich gegen Klemmrichtung wölbend ausgebildet sein. Mit der Aufnahmerille kann eine Orientierungshilfe zum ordnungsgemäßen bzw. gleichmäßig verteilten Einlegen der Versorgungsleitungen in die Zugentlastung bereitgestellt werden. Die Aufnahmerillen sind hierzu vorzugsweise gleichmäßig quer zur Längsrichtung verteilt.

Insbesondere kann die Grundfläche der keilförmigen Durchgangsöffnungen jeweils einen Innenwinkel kleiner 60°, insbesondere kleiner/gleich 45° oder kleiner/gleich 30° aufweisen. Vorzugsweise können die diesen Innenwinkel begrenzenden Seiten bzw. inneren Wandungen gleichschenklig ausgebildet sein. Dadurch erhält die Durchgangsöffnung eine schlankere keilartige Form, wobei die gleichschenkligen Seiten zu der Scheitelkante zusammenlaufen, die im Querschnitt die in bzw. gegen Klemmrichtung weisende Spitze bilden. Damit erstrecken sich die die Scheitelkante bildenden Wandungen stärker als bei einer gleichseitigen dreieckigen Grundfläche in Klemmrichtung. Hierdurch kann die Hohlraumstruktur hinsichtlich einer Kraftaufnahme weiter stabilisiert werden, welches einem unerwünschten Ausbrechen der Hohlraumstruktur in Querrichtung entgegenwirkt.

Es hat sich als vorteilhaft erwiesen, wenn die mit einer Hauptkomponente sich in Klemmrichtung erstreckenden inneren Wandungen der Durchgangsöffnungen in einem Bogen geführt ausgebildet sind. Hierdurch kann die Biegung der Durchgangsöffnungen bei der Verformung vorbestimmt werden. Ferner kann über die Biegung das Federsystem um eine weitere elastische Federkomponente erweitert werden. Wegen der Kräftesymmetrie ist es von Vorteil, wenn diese elastische Wandungen bezüglich der Querrichtung paarweise und in dem Paar jeweils gegenläufig gebogen ausgeführt sind.

In einer Weiterbildung können die Durchgangsöffnungen wabenartig in zumindest zwei zueinander parallelen Reihen angeordnet sein. Es können eine Reihe oder beide Reihen die Klemmfläche definieren. Die Reihen können sich bezüglich einer Querrichtung senkrecht zur Längsrichtung und Klemmrichtung wabenartig erstrecken. Wabenartig heißt hier insbesondere, dass sich die Durchgangsöffnungen der einen Reihe bezüglich der Querrichtung und/oder der Klemmrichtung mit denen der anderen Reihe zumindest teilweise überlappen. Die Durchgangsöffnungen der jeweiligen Reihe können auch bezüglich der Querrichtung und/oder Klemmrichtung fluchtend zueinander angeordnet sein. Es kann eine Wabenstruktur mit einer periodischen, regelmäßigen oder gleichmäßigen Anordnung der Durchgangsöffnungen vorgesehen sein, nicht zwingend aber z.B. mit hexagonaler Grundform.

Insbesondere bei einer wabenartigen Anordnung von Durchgangsöffnungen mit sechseckiger Grundfläche kann infolge des in Klemmrichtung Überragens der einen Reihe vor der anderen Reihe eine Klemmfläche mit Aufnahmerillen ausgebildet werden, die, von drei Durchgangsöffnungen begrenzt jeweils, eine Querschnittsform eines halbierten Sechsecks aufweisen. Entsprechend können sich bei einer wabenartigen Anordnung von Durchgangsöffnungen jeweils mit rautenförmiger Grundfläche V-förmige Aufnahmerillen ausbilden, die jeweils von zwei Durchgangsöffnungen begrenzt werden.

Vorzugsweise sind die der Klemmfläche zugeordneten Durchgangsöffnungen in einem Volumenabschnitt des blockartigen Klemmteils angeordnet. Der Volumenabschnitt kann durch die Klemmfläche und zumindest einen Abschnitt einer Gesamthöhe des Klemmteils von der Klemmfläche ausgehend und senkrecht derselben definiert werden. Insbesondere können zumindest einige der Durchgangsöffnungen der anderen Reihe jeweils seitlich zwischen zwei Durchgangsöffnungen der einen Reihe durchgreifend linienhaft an der Klemmfläche angreifen.

Allgemein kann mit dem Festklemmen der Versorgungsleitungen zwischen den Klemmflächen die Zugentlastung im Betrieb erhöhten in Längsrichtung wirkenden Zugkräften ausgesetzt sein. Diese können, abhängig von der Art und/oder Verteilung der Versorgungsleitungen, zudem asymmetrisch auf die Zugentlastung wirken. Damit ist die Gefahr einer Verwindung der Klemmteile um die Längsachse sowie einer Biegung um eine Biegeachse parallel zur Klemmrichtung und/oder um eine Biegeachse parallel zur Querrichtung gegeben. Um dem entgegenzuwirken, können an bestimmten Stellen und Bereichen des Klemmteils Versteifungen, insbesondere durch mindestens eine weitere innere Wandung, vorgesehen sein. Durch diese Versteifungen kann gezielt eine Verminderung der Elastizität eingestellt werden. Damit kann das eingangs beschriebene Federsystem federelastisch härter ausgelegt werden.

Hierzu kann vorgesehen sein, dass eine Versteifung bestimmter Durchgangsöffnungen mit einer sie in Längsrichtung teilenden Wandung jeweils beispielsweise in Form einer den Querschnitt teilenden Innenverstrebung. Die Versteifung kann mittels einer Verstärkung der sie begrenzenden Wandung, einer Verringerung der Querschnittsfläche und/oder durch ein Fortlassen von Durchgangsöffnungen erfolgen.

Insbesondere kann vorgesehen sein, dass in einem bezüglich der Längsrichtung mittleren Bereich eine sich über die Länge des Klemmteils und in Querrichtung erstreckende Querverstrebung vorgesehen ist. Diese Querverstrebung kann eine plattenartige Form aufweisen, die einer Biegung um die Biegeachse parallel zur Klemmrichtung ein erhöhtes Widerstandsmoment entgegensetzt.

Weiter bevorzugt kann bezüglich der Querrichtung senkrecht zur Längsrichtung und Klemmrichtung in einem mittleren und/oder endseitigen Bereich eine sich über die Länge des Klemmteils und in Klemmrichtung erstreckende Querverstrebung vorgesehen sein. Diese Querverstrebung kann ebenfalls eine plattenartige Form aufweisen, die einer Biegung um die Biegeachse parallel zur Querrichtung ein erhöhtes Widerstandsmoment entgegensetzt. Ferner wird durch diese Querverstrebung der Übergang des federelastischen Systems zu vorgesehenen Haltebereichen des Klemmteils zur Halterung und Festlegung desselben in der Klemmvorrichtung hinsichtlich des Kraftverlaufs Verschleißmindernd abgemildert.

Die Wandstärke der Querverstrebung kann dabei insbesondere größer sein, als die Wandstärke der äußeren Wandung mit der Klemmfläche und/oder der inneren Wandungen.

In einer bevorzugten Ausführungsform ist das Klemmteil bezüglich einer Hauptebene, die senkrecht zur Längsrichtung und Klemmrichtung liegt, spiegelsymmetrisch ausgeführt mit zwei seitlichen, elastischen Wandungen, die durch eine symmetrische Hohlraumstruktur begrenzt sind und Klemmflächen bereitstellen. Die o.g. Querverstrebung kann dabei als eine Art Mittelstrebe in der Symmetrieebene liegen bzw. diese bilden.

In einer Weiterbildung der Zugentlastung kann die Klemmfläche zumindest eine oder mehrere Aufnahmerinnen zur Aufnahme von Versorgungsleitungen insbesondere mit einem größeren Querschnitt aufweisen. Der Querschnitt der Aufnahmerinnen kann jeweils vorzugsweise allein durch die an der jeweiligen Aufnahmerinne angrenzenden Durchgangsöffnungen definiert werden. In Unterscheidung zu den oben beschriebenen Aufnahmerillen weisen die Aufnahmerinnen jeweils eine Tiefe auf, die bis zu einem Mehrfachen größer als der mittlere Durchmesser der sie jeweils begrenzenden Durchgangsöffnung ist.

Diese zusätzlichen Aufnahmerinnen sind jeweils von Klemmfläche her eingebracht, ohne die angrenzenden Durchgangsöffnungen zu schneiden. Vorteilhaft wegen einer möglichen Einklemmung der in die Aufnahmerinne eingelegten Versorgungsleitung und damit federelastischen Verspannung der an die Aufnahmerinne angrenzenden Durchgangsöffnung, können die Aufnahmerinnen gegen Klemmrichtung keilförmig zusammenlaufend ausgebildet sein. Dies ist bei Durchgangsöffnungen zum Beispiel mit einer dreieckigen oder rautenförmigen Grundfläche möglich.

Insbesondere kann das Klemmteil eine weitere Klemmfläche aufweisen, die abgewandt und parallel zu der einen Klemmfläche des Klemmteils an demselben angeordnet ist. Montagefreundlich können die beiden Klemmflächen gleich ausgebildet sein. Eine diesbezüglich einfache Ausführungsform ist z.B. spiegelsymmetrisch zur Hauptebene des Klemmteils.

Es kann jeder Klemmfläche eine Gruppe von vorzugsweise gleichen Durchgangsöffnungen zugeordnet sein. Hierzu kann die Gruppe einer Klemmfläche bezüglich der Klemmrichtung mittelbar über einen Bereich ohne Durchgangsöffnungen oder unmittelbar an die der weiteren Klemmfläche zugeordneten Durchgangsöffnungen aneinander anschließend angeordnet sein. Der Bereich ohne Durchgangsöffnungen bildet eine bereits oben beschriebene Querverstrebung, die eine Erhöhung der Verwindungsfestigkeit oder allgemein eine Versteifung des Klemmteils bewirkt. Vorzugsweise ist diese Querverstrebung in einem Mittenbruch oder genau mittig angeordnet.

Bei einem unmittelbaren Anschluss der beiden Gruppen können diese vorzugsweise ununterscheidbar, d.h. ohne Störung einer gleichmäßigen oder regelmäßigen Öffnungsstrukturen ineinander übergehen.

Das Klemmteil ist vorzugsweise einstückig ausgebildet und insbesondere vollständig aus einem Werkstoff hergestellt. Als Werkstoff wird ein elastischer Kunststoff bevorzugt, insbesondere ein nicht poröses thermoplastisches Elastomer. Das Klemmteil kann beispielsweise durch Spritzguss oder in einem additiven Verfahren hergestellt werden. Die Herstellung im Spritzgussverfahren wird bevorzugt.

Die Klemmvorrichtung kann, ohne diese darauf beschränken zu wollen, beispielsweise einen an sich bekannten Aufnahmerahmen aufweisen, in dem das Klemmteil bzw. die Klemmteile allein in Klemmrichtung verschieblich gelagert und in Klemmrichtung pressbar angeordnet ist bzw. sind.

Als geeignete Klemmvorrichtung kommt insbesondere eine Vorrichtung gemäß DE 20 2017 102 147 in Betracht.

In einer Weiterbildung kann die Zugentlastung mindestens ein weiteres Klemmteil aufweisen, wobei die beiden Klemmteil in Einbaulage in die Zugentlastung mit ihren Klemmflächen gegenüberliegend und gegeneinander pressbar angeordnet sind. Vorzugsweise sind die beiden Klemmteile baugleich ausgebildet. Typisch werden mehrere Klemmteile verwendet, wobei die Klemmteile nicht zwingend aber vorzugsweise als identische Gleichteile ausgeführt sind, was die Montage und Lagerhaltung vereinfacht. Die Leitungen werden dann in mehreren Ebenen, jeweils zwischen zwei gegenüberliegenden Klemmteilen eingeklemmt.

Das Klemmteil kann bzw. die Klemmteile können jeweils, wie aus dem eingangs genannten Stand der Technik bekannt, zu seiner bzw. ihrer Halterung und Führung in dem in der Klemmvorrichtung vorgesehenen Aufnahmerahmen bezüglich der Querrichtung beidendseitig jeweils einen Haltebereich und zwischen denselben einen Klemmbereich mit der Klemmfläche aufweisen.

Hinsichtlich eines stabilen Sitzes der Klemmteile in dem Aufnahmerahmen können die Klemmteile in Klemmrichtung insbesondere über eine Steckverbindung miteinander verbunden sein. Hierzu kann das Klemmteil in beiden Haltebereiche an der Seite mit der Klemmfläche jeweils einen sich in Einbaulage in Klemmrichtung erstrecken Steckvorsprung und an der hierzu abgewandten Seite eine dem Steckvorsprung entsprechend angepasste Stecköffnung aufweisen, die in Klemmrichtung in dem jeweils zugeordneten Haltebereich eingelassen ist. Vorzugsweise sind der Steckvorsprung und, hieran angepasst, die Stecköffnung in Klemmrichtung konisch zulaufend ausgebildet. Erfindungsgemäß kann ein Endbefestigungsteil einer Leitungsführungseinrichtung bzw. Energieführungskette mit einer Zugentlastung gemäß einer zuvor und nachfolgend beschriebenen Ausführungsformen ausgerüstet sein. Hierbei kann die Zugentlastung bezüglich ihrer Erstreckung in Querrichtung und in Klemmrichtung senkrecht zur Längserstreckung des Endbefestigungsteils und damit senkrecht zur Längserstreckung der Energieführungskette angeordnet sein.

Vorzugsweise werden dabei eine Anzahl Klemmteile in einem Rahmen gehalten. Die Klemmteile werden vorzugsweise senkrecht eingebaut, d.h. in einer Ausrichtung mit im Wesentlichen senkrecht verlaufenden Klemmflächen. Dies hat den Vorteil, dass alle Leitungen z.B. für Wartungszwecke leichter zugänglich gemacht werden können, als in einer horizontalen Stapelung (vgl. FIG.1).

Insbesondere kann das Endbefestigungsteil zum Anschluss an die Versorgungsleitung in üblicher Weise einen Verbindunganschluss aufweisen, der an die anzuschließende Versorgungsleitungseinrichtung, insbesondere an eine Leitungsführungseinrichtung bzw. Energieführungskette, angepasst ist. Ohne sich darauf beschränken zu wollen, da auch eine Vielzahl anderer konstruktiver Lösungen möglich ist, kann der Verbindunganschluss beispielsweise zwei in Querrichtung voneinander beabstandeten Seitenteile aufweisen.

Im Falle einer Energieführungskette, d.h. einer Versorgungsleitungseinrichtung aus verschwenkbaren Kettengliedern mit Seitenlaschen kann vorgesehen sein, dass die Seitenteile als den Seitenlaschen angepasste Anschlussseitenlaschen ausgebildet sind, an denen das an das Endbefestigungsteil anzuschließende Kettenglied mit seinen Seitenlaschen verschwenkbar verbindbar ist.

Die vorgeschlagene Zugentlastung eignet sich besonders gut zur Verwendung in Energieführungsketten, in welchen ganz typisch verschiedene Leitungen mit unterschiedlichen Durchmessern geführt werden.

Bevorzugt ist das Klemmteil einteilig aus elastischem Kunststoff, insbesondere aus einem TPE im Spritzgussverfahren, hergestellt und hat zwei gegenüberliegende Seitenflächen, die jeweils zwecks Zugentlastung eine Klemmfläche zum Einklemmen mindestens einer Versorgungsleitung gegen eine weitere Klemmfläche umfassen.

Erfindungsgemäß ist zumindest in dem zur Einklemmung der Versorgungsleitungen vorgesehenen Bereich der Klemmfläche eine elastische Wandung vorgesehen, welche auf der von der Klemmfläche abgewandten Seite eine Hohlraumstruktur begrenzt, wobei diese Hohlraumstruktur durch eine gitterartige Anordnung einer Anzahl weiterer elastischer Wandungen gebildet wird, die mit der ersten elastischen Wandung einteilig verbunden sind.

Bevorzugt ist das Klemmteil bezüglich einer Hauptebene senkrecht zur Klemmrichtung spiegelsymmetrisch ausgeführt, sodass es auf die Drehausrichtung bei der Montage nicht ankommt.

Vorzugsweise hat das Klemmteil in der Hauptebene eine sich über eine Hauptabmessung erstreckende Querverstrebung, die einstückig mit der gitterartigen Anordnung der Wandungen verbunden ist.

In einer im Spritzgussverfahren einfach herzustellen Ausführungsform hat die Hohlraumstruktur mehrere in Längsrichtung verlaufende Durchgangsöffnungen, die sich zumindest überwiegend oder vollständig durchgehend in oder etwa in Längsrichtung durch das Klemmteil erstrecken. Eine überwiegend durchgehende Erstreckung geht dabei durch mindestens 50% der Abmessung des Klemmteils in Längsrichtung. Bevorzugt ist dabei die Hohlraumstruktur wabenartig ausgeführt ist d.h. dass die elastischen Wandungen Zellwände bilden, welche die Durchgangsöffnungen senkrecht zur Längsrichtung begrenzen.

In einer bzgl. Kräfteverteilung günstigen Ausführungsform hat die gitterartige Anordnung paarweise angeordnete Wandungen, wobei in jedem Paar gegenüberliegende Wandungen jeweils gegenläufig gebogen sind. Dabei können diese nach innen zulaufen, d.h. begrenzten zwischenliegenden Durchgangsöffnung, welche eine gegen die Klemmrichtung bzw. von der elastischen Wandung mit der Klemmfläche weg zuspitzende Querschnittsform hat. Bevorzugt gehen die Wandungen in jedem Paar an dem von der Klemmfläche abgewandten Endbereich einteilig in die Querverstrebung über.

An zwei gegenüberliegenden Schmalseiten des Klemmteils, die senkrecht zu den Seitenflächen liegen, kann jeweils mindestens ein Vorsprung und/oder eine Vertiefung vorgesehen sein, der/die zur formschlüssigen Halterung in einem Rahmen einer Klemmvorrichtung, z.B. gemäß DE 20 2017 102 147 dient. Dabei kann der Vorsprung und/oder die Vertiefung in Klemmrichtung bzw. quer zur Längsrichtung verlaufen.

Die erfindungsgemäßen Klemmteile eignen sich besonders zur Verwendung in einer Zugentlastung mit mehreren Versorgungsleitungen, insbesondere in einer Zugentlastung einer Energieführungskette, oder auch in einer Zugentlastung im Gehäuse eines Steckverbinders, insbesondere eines Rechtecksteckverbinders mit mehreren Steckereinsätzen.

Weitere Einzelheiten und Vorteile der Erfindung werden im Folgenden, ohne Einschränkung des Schutzumfangs, durch die Beschreibung bevorzugter Ausführungsformen unter Bezugnahme auf die beigefügten Zeichnungen ersichtlich. Hierbei zeigen:
FIG. 1 eine Seitenansicht einer im Stand der Technik bekannte Zugentlastung mit mehreren übereinander gestapelten Klemmteilen,
FIG. 2a eine Seitenansicht einer Ausführungsform einer erfindungsgemäßen Zugentlastung mit mehreren Klemmteilen,
FIG. 2b und 2c jeweils eine Ansicht eines Endbefestigungsteil mit der erfindungsgemäßen Zugentlastung gemäß Figur 2a,
FIG. 3a eine Seitenansicht einer weiteren Ausführungsform des Klemmteils.
FIG. 3b und 3c jeweils eine Seitenansicht zweier übereinander gestapelter Klemmteile gemäß Figur 3a ohne eingeklemmte Versorgungsleitungen bzw. mit eingeklemmten Versorgungsleitungen,
FIG. 4a-4d jeweils eine Ansicht einer weiteren Ausführungsform des Klemmteils,
FIG. 5a-5d jeweils eine Ansicht einer weiteren Ausführungsform des Klemmteils,
FIG. 6a-6d jeweils eine Ansicht einer weiteren Ausführungsform des Klemmteils,
FIG. 7a-7d jeweils eine Ansicht einer weiteren Ausführungsform des Klemmteils,
FIG. 8a eine Seitenansicht einer weiteren Ausführungsform des Klemmteils,
FIG. 8b und 8c jeweils eine Ansicht zweier übereinander gestapelter Klemmteile gemäß Figur 8a ohne eingeklemmte Versorgungsleitungen,
FIG. 9a-9c jeweils eine Ansicht einer weiteren Ausführungsform des Klemmteils,
FIG. 10a und 10b jeweils eine Ansicht einer weiteren Ausführungsform des Klemmteils,
FIG. 11 eine Seitenansicht einer weiteren Ausführungsform des Klemmteils,
FIG. 12a und 12b eine besonders bevorzugte Ausführungsform eines erfindungsgemäßen Klemmteils, jeweils in Frontansicht und in perspektivischer Ansicht,
FIG. 13 eine Frontansicht einer bevorzugten Zugentlastung für Energieführungsketten;
FIG. 14 einen Längsschnitt eines Steckergehäuses eines industriellen Rechteck-Steckverbinders mit zwei erfindungsgemäßen Klemmteilen zwecks Zugentlastung.

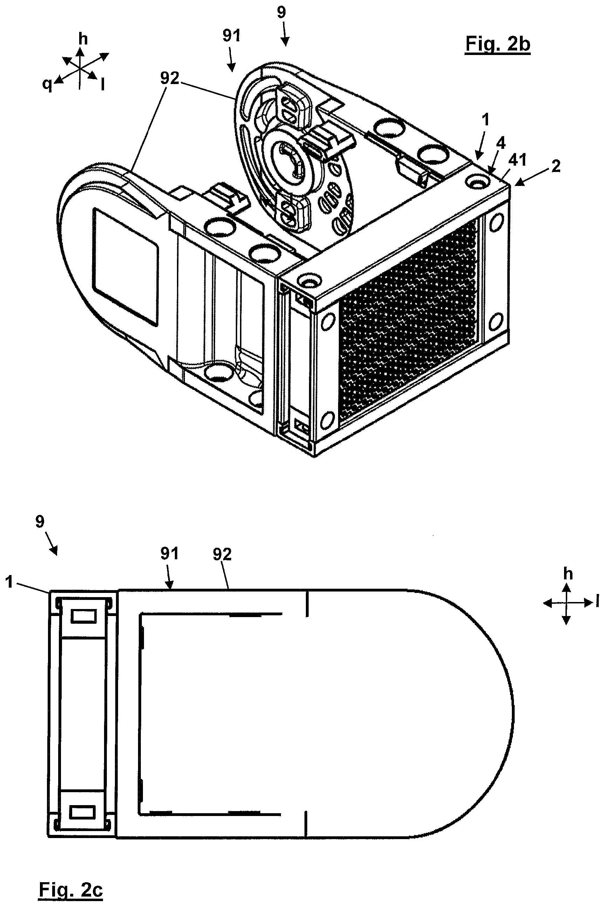

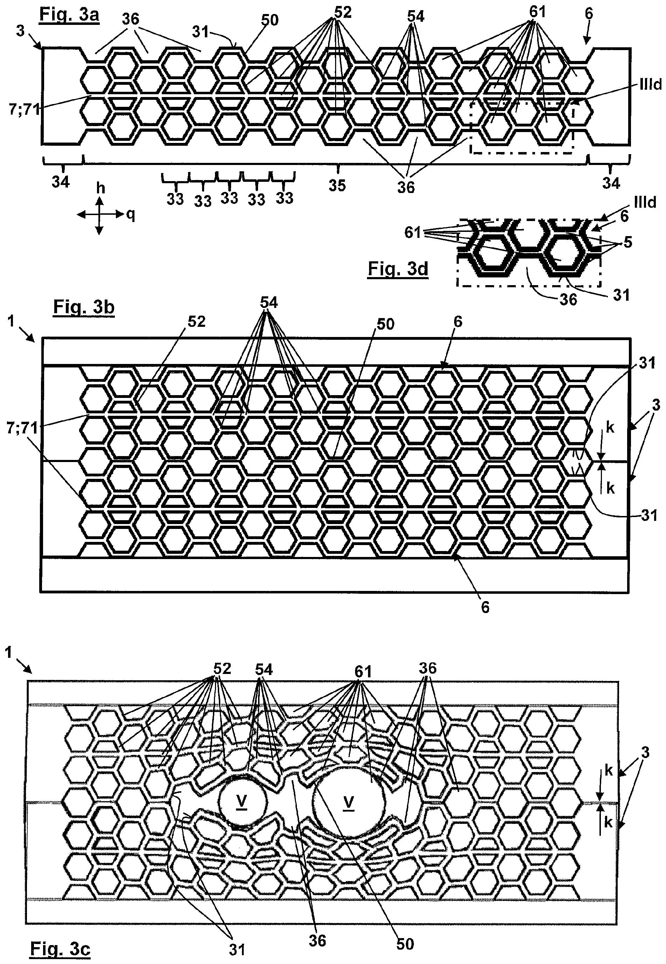

FIG. 1 zeigt eine aus dem Katalog der Anmelderin "igus Katalog e-ketten und -systeme 2015", Seite 1175, bekannte und damit dem Stand der Technik bildenden Zugentlastung 1" für beispielhaft in FIG. 3c gezeigten Versorgungsleitungen V einer hier nicht weiter dargestellten Versorgungsleitungseinrichtung. FIG. 2 zeigt eine entsprechende Ansicht der erfindungsgemäßen Zugentlastung 1. Die Bezugszeichen für die Bauteile der Zugentlastung 1" gemäß dem Stand der Technik weisen zur Unterscheidung von der erfindungsgemäßen zusätzlich ein Anführungszeichen auf. Die Zugentlastung 1;1" weist eine Klemmvorrichtung 2;2" mit hier fünf übereinander gestapelten blockartigen Klemmteil 3;3" auf. Die Klemmteile 3;3" weisen zumindest eine als Klemmfläche 31;31" ausgebildete Seitenfläche zum Einklemmen der Versorgungsleitungen V gegen eine weitere Klemmfläche 31;31" der Klemmvorrichtung 2;2" auf. Hierbei ist die Zugentlastung 1;1" zur Durchführung der Versorgungsleitungen in einer Längsrichtung l senkrecht zur Klemmrichtung k ausgelegt, wobei die Längsrichtung l in FIGS. 1 und 2 jeweils senkrecht zur Bildebene angeordnet ist. Die übereinander gestapelten Klemmteile 3;3" liegen mit ihren Klemmflächen 31;31" in Klemmrichtung k gegeneinander gepresst aneinander an. Sie sind in einem Aufnahmerahmen 4;4" in Klemmrichtung k verschieblich geführt. Der im Aufnahmerahmen 4;4" gemäß FIGS. 1 und 2a obere Quersteg 41;41" ist zum Einklemmen der Versorgungsleitung V über eine hier nicht dargestellte Verbindung in Klemmrichtung k gegen die Klemmteile 3;3" pressbar. Die Erfindung ist jedoch nicht allein auf diese konstruktive Möglichkeit zur Festlegung der Klemmteile 3 in der Zugentlastung 1 beschränkt.

Im Stand der Technik ist das Klemmteil 3" ein kompakter Vollkörper. In die Klemmflächen 31" des Klemmteils 3" sind halbkreisförmige Aufnahmerinnen 32" eingeschnitten, die, in Einbaulage, mit den entsprechenden Aufnahmerinnen 32" der zugeordneten Klemmfläche 31" des benachbarten Klemmteils 3" zu einer kreisförmigen Aufnahme für jeweils eine Versorgungsleitung ergänzt werden. Wie deutlich entnehmbar, ist für jede der Versorgungsleitungen eine derartige kreisringförmige Aufnahme vorgesehen, wobei diese eigens an den Durchmesser der jeweils zugeordneten Versorgungsleitung angepasst ist.

Im Gegensatz dazu ist bei der Erfindung vorgesehen, dass die Klemmfläche 31 zumindest in einem zur Einklemmung der Versorgungsleitungen V vorgesehenen Klemmabschnitt 33 durch eine elastische Wandung 50 gebildet wird, wobei die elastische Wandung 50 auf der der Klemmfläche 31 abgewandten Seite eine sich in Längsrichtung l durch das Klemmteil 3 erstreckende Hohlraumstruktur 6 begrenzt. Dies ist beispielgebend in FIG. 3d, eine Ausschnittvergrößerung aus FIG. 3a, entnehmbar, wobei die Längsrichtung l senkrecht zur Zeichnungsebene verläuft. Durch diese Maßnahme ist die Klemmfläche 31 mit dem Festklemmen einer Versorgungsleitungen V flexibel in die Hohlraumstruktur 6 hinein aufweitbar, wodurch sie ähnlich einer beidendseitig eingespannten Blattfeder fungiert und mit der Aufweitung Federenergie speichert, die in Form einer Rückstellkraft auf die eingeklemmte Versorgungsleitung V wirkt.

Wie den FIGS. 2-11 entnehmbar, wird in den hier dargestellten erfindungsgemäßen Ausführungsformen der Zugentlastung 1 die Hohlraumstruktur 6 durch mehrere bis zu einer Vielzahl an in Längsrichtung l verlaufenden Durchgangsöffnungen 61 definiert, von denen zumindest einige von der die Klemmfläche 31 aufweisenden elastischen Wandung 50 begrenzt werden. Ferner grenzen die Durchgangsöffnungen 61 über elastische innere Wandungen 52 aneinander an. Diese bilden ein Gitter aus sich in Längsrichtung l erstreckenden zumindest ähnlichen elastischen Wandungen 52. Die Durchgangsöffnungen 61 sind jeweils kanalartig ausgebildet und weisen keine Querschnittsveränderung über die Länge ihrer Erstreckung auf (senkrecht zur Zeichnungsebene bzgl. FIG.3a-3c). Insofern weisen die Durchgangsöffnungen 61, abhängig von dem jeweiligen Öffnungsquerschnitt, eine säulenartige bzw. zylindrische oder pfeilerartige bzw. prismatische Form auf.

Somit werden die Durchgangsöffnung 61 von elastischen Wandungen 50, 52 seitlich begrenzt. Da zumindest einige als Teil der Hohlraumstruktur 6 zugleich von der die Klemmfläche 31 aufweisenden elastischen Wandung 50 begrenzt werden, bilden die elastischen Wandungen 50, 52, das heißt die elastische Wandung 50 mit der Klemmfläche 31 und die weiteren die Durchgangsöffnungen 61 begrenzenden elastischen Wandungen 52, ein elastisches Gitter, in dem die einzelnen elastischen Wandungen 50, 52 an bestimmten Punkten miteinander verbunden sind. Dieses elastische Gitter aus Wandungen 50, 52 bildet ein Federsystem, welches mit dem Einklemmen von Versorgungsleitungen V gezielten verformt wird und eine Rückstellkraft auf die jeweilige Versorgungsleitung V zum Festlegen derselben zwischen zwei Klemmfläche 31 der Klemmvorrichtung 2 erzeugt. Somit werden die Versorgungsleitungen V reibschlüssig in der Zugentlastung 1 festgelegt und sind durch Haftreibung gehalten.

In den FIGS. 3a-3d wird dieser Vorgang beispielgebend an dem Klemmteil 3 mit einer Hohlraumstruktur 6 gezeigt, die Durchgangsöffnungen 61 jeweils mit einem sechseckigen Querschnitt aufweist, so dass die die Durchgangsöffnung 61 begrenzenden Wandungen 50, 52 die Form eines geraden Hohlprismas mit sechseckiger Grundfläche bilden. Die Wandungen 50, 52 der Durchgangsöffnungen 61 schließen zur Erstellung des elastischen Gitterwerks jeweils an den Ecken der Sechsecke aneinander an.

FIG. 3a zeigt eine Einzeldarstellung einer Ausführungsform des Klemmteils 3. In FIG. 3b sind zwei Klemmteile 3 an den einander zugeordneten Klemmfläche 31 gegenüberliegend angeordnet, ohne dass Versorgungsleitungen zwischen den Klemmfläche 31 eingeklemmt werden.

Deutlich sichtbar ist, dass die aneinandergrenzenden Durchgangsöffnungen 31 hier eine durchgängige sechseckige Struktur bilden. In FIG. 3c sind zwei Versorgungsleitungen V mit unterschiedlichen Querschnitt zwischen den Klemmflächen 31 reibschlüssig festgelegt, wobei die Klemmflächen 31 elastisch aufgeweitet und die elastischen Wandungen 50, 52 zwischen den Durchgangsöffnung 31 verformt sind. Deutlich sichtbar ist, dass die Verformung der Wandung 50, die die Klemmfläche 31 definiert, am größten ist und dass die Verformung der inneren Wandungen 52 gegen Klemmrichtung k deutlich abnimmt. Die Durchgangsöffnungen 61 der Gitter können somit als kleine Einheitszellen angesehen werden, die kumulativ zum Verformungsverhalten beitragen. Die plattenförmigen elastischen Wandungen 50, 52 sind in Knotenlinien 54 des Gitters miteinander verbunden, die im Querschnitt als Knotenpunkte erscheinen.

Ferner wird deutlich, dass das elastische Gitterwerk aus Wandungen 50, 52 insgesamt auf die Verformung reagiert und somit eine Art zusammenhängendes Verformungskontinuum bildet. Es kann u.a. über die Formgebung gezielt ein bestimmtes Verformungsverhalten des elastischen Gitters voreingestellt werden. Dies kann über die Ausbildung und Anordnungsdichte der Durchgangsöffnung 31 pro Flächeneinheit, der Wandstärke der elastischen Wandungen 50, 52, die werkstoffspezifische Elastizität der Wandungen 50, 52 und ggf. das Vorsehen von Bereichen ohne Durchgangsöffnungen zur Verstärkung oder Versteifung des Klemmteils erfolgen. Insbesondere kann ein bestimmtes federelastisch weiches oder hartes Verhalten eingestellt werden. Diese Voreinstellung kann so erfolgen, dass die Zugentlastung 1 vielseitig einsetzbar ist, wobei sie für eine bestimmte Bandbreite an Versorgungsleitungsquerschnitten und/oder Versorgungsleitungsarten geeignet ausgelegt sein kann. Die Einstellung kann auch so erfolgen, dass die Zugentlastung 1 auf bestimmte Kundenwünsche hin spezifiziert wird.

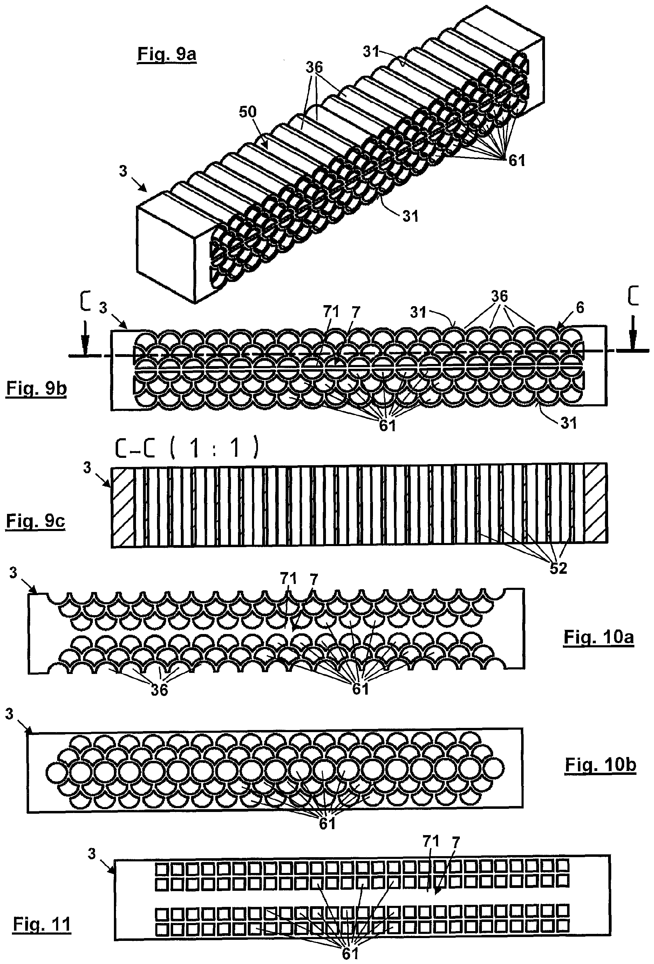

Die Wandstärke der die Klemmfläche 31 definierenden Wandung 50 und die Wandstärke der Wandungen 52, über welche die Durchgangsöffnungen 61 aneinander angrenzen, sind bis auf die in FIG. 10b gezeigten Ausführungsformen des Klemmteils 3 gleich groß. Die Wandstärke der elastischen Wandung 50 bzw. der elastischen Wandungen 52 ist hierbei z.B. etwa kleiner als ein oder gleich einem Sechstel eines weiter oben definierten durchschnittlichen Durchmessers der aneinander grenzenden Durchgangsöffnungen 61.

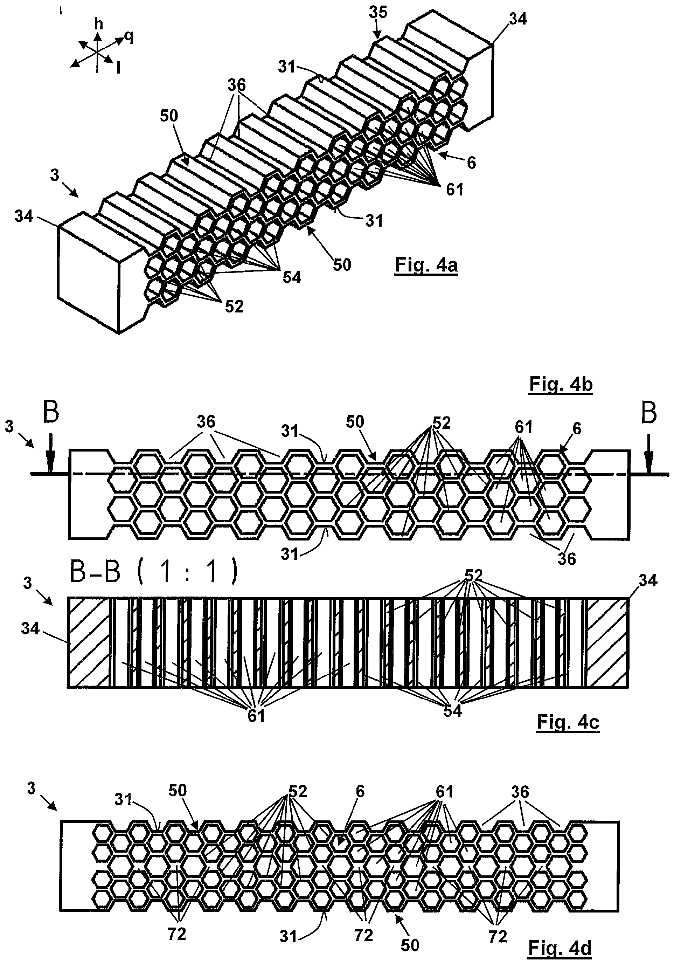

Zudem sind die Durchgangsöffnung 61, wie die Durchgangsöffnungen 61 der Hohlraumstruktur 6 der Zugentlastung 11 gemäß den FIGS. 4 und 7-10, wabenförmig angeordnet. Wabenförmig heißt hier insbesondere, dass Durchgangsöffnungen 61 sich in Querrichtung q und in Höhenrichtung h z.T. überlappen. Die Höhenrichtung h ist dabei parallel zu der Klemmrichtung k. Die Durchgangsöffnungen 61 verlaufen in parallelen Reihen zur Querrichtung q.

Infolge der Überlappung in Querrichtung q werden an der Klemmfläche 31 durch die Wandung 50 in Querrichtung q gleichmäßig beabstandete Aufnahmerillen 36, gebildet, die als Orientierungshilfe bzw. Raster beim Einlegen der Versorgungsleitungen V in Längsrichtung l in die Klemmvorrichtung 2 dienen können. Die Größe des Öffnungsquerschnitts der Aufnahmerillen 36 wird von der Größe des sechseckigen Öffnungsquerschnitts der Durchgangsöffnungen 61 bestimmt. Sie weist hier eine Querschnittsform eines halbierten Sechsecks auf. Die der Klemmfläche 31 zugeordneten Durchgangsöffnungen 61 sind hier kongruent bzw. diese weisen eine gleiche Größe, einen gleichen Querschnitt und eine gleiche Ausrichtung auf.

Allgemein weisen die Klemmteile 3 bezüglich der Querrichtung q beidendseitig einen Haltebereich 34 zur verdrehfesten und längsverschieblichen Anordnung in dem in FIG. 2 gezeigten Aufnahmerahmen 4 der Klemmvorrichtung 2 sowie einen zwischen den Haltebereichen 34 angeordneten Klemmenbereich 35 mit der Klemmfläche 31 und der Hohlraumstruktur 6 auf.

Deutlich entnehmbar sind den FIGS. 3a-3c eine sich in Querrichtung q über den gesamten Klemmbereich 35 erstreckende Querverstrebung 7 in Form eines durchlaufenden Quersteges 71. Dieser erstreckt sich plattenförmig in Querrichtung q über die gesamte Längserstreckung des Klemmteils 3. Damit kann, wie weiter oben beschrieben, kraftmechanisch günstig auf die in Richtung der durch die Versorgungsleitungen V in die Zugentlastung 1 eingebrachten Zugkräfte besser aufgenommen werden. Die Wandstärke der Querverstrebung 7 ist hier etwa gleich wie die der Wandungen 50, 52.

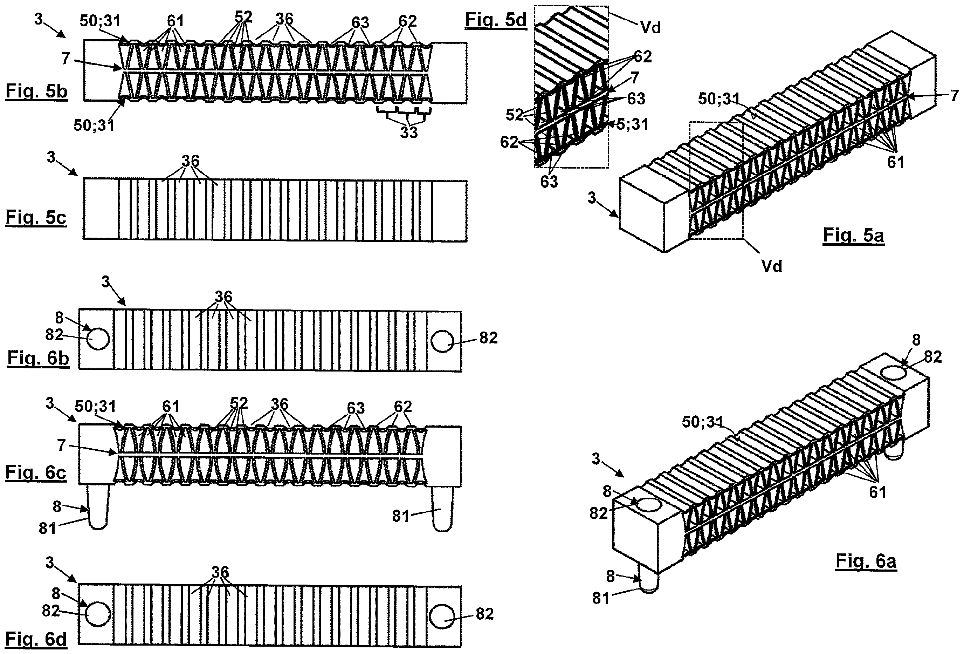

Die Querverstrebung 7 kann, wie die Wandungen 50, 52, elastisch ausgebildet sein um das elastische Verformungsverhalten nicht übermäßig zu beeinträchtigen. Da die Querverstrebung 7 jedoch, in Höhenrichtung h mittig angeordnet, die mittleren Durchgangsöffnungen 61 teilt, hier z.B. halbiert, stellt sie zugleich eine Versteifung der Hohlraumstruktur 6 dar und wodurch die Verformung des elastischen Gitters aus Wandungen 50, 52 an dieser Stelle entsprechend abnimmt. Auch in den Ausführungsformen der Zugentlastung gemäß den FIGS. 5a-5d, 6a-6c, 8a-c, 9a-9c, 10a-10b und 11) ist jeweils eine Querverstrebung 7 entweder durch einen Quersteg 71 (FIGS. 5a-5d, 6a-6c, 8a-8c) oder aber durch einen von Durchgangsöffnungen 61 freien mittigen Bereich (FIGS. 10a und 11) vorgesehen. Auch durch derartige Versteifungen kann gezielt auf das Verformungsverhalten, insbesondere auf die Verwindungssteifigkeit, sowie entsprechend auf das Federverhalten dieses elastischen Gitters eingewirkt werden.

In der Ausführungsformen der Zugentlastung 1 gemäß FIGS. 4d und 10 wird ein verändertes Verformungsverhalten dadurch erzielt, dass eine mittlere Reihe von Durchgangsöffnungen 71 vorgesehen ist, die einen größeren Querschnitt als die übrigen Durchgangsöffnungen 71 aufweisen, wobei sie in Figur 4d und somit lediglich ähnlich zu denselben sind. Ferner sind in FIG. 4d zur Versteifung bezüglich der Querrichtung q zwischen diesen mittigen Durchgangsöffnungen 71 jeweils ausgeprägte Verdickungen 72 vorgesehen.

Eine weitere Möglichkeit der Anordnung und Form der Durchgangsöffnungen 61 wird in den FIGS. 5a-5d bzw. 6a-6d dargestellt. Hier weisen die Durchgangsöffnungen 61 die Form eines geraden Prismas mit einer dreieckigen Grundfläche auf und begrenzen ein elastisches Gitter. Wie insbesondere aus FIG. 5d, einer Ausschnittvergrößerung Vd aus FIG. 5a, ersichtlich, weist ein derartiges gerades Prisma mit dreieckiger Grundfläche eine Keilform mit linienartigen Scheitelkanten 62 auf. Diese Form ist kraftmechanisch besonders günstig.

Bezüglich der Klemmrichtung k sind die Durchgangsöffnungen 61 unterschiedlich orientiert angeordnet: Bei einer Gruppe Durchgangsöffnungen 61 weist die Scheitelkante 62 gegen Klemmrichtung k, während die Scheitelkante 62 bei der anderen Gruppe 61 gegen Klemmrichtung k weisend angeordnet ist. Die Durchgangsöffnungen 61 der beiden Gruppen sind bezüglich der Querrichtung alternierend und fluchtend zueinander angeordnet.

Ferner sind die Durchgangsöffnung 61 der Gruppe mit der gegen Klemmrichtung k weisenden Scheitelkante 62 von der elastischen Wandung 50 der Klemmfläche 31 begrenzt. Das heißt, die der Scheitelkante 62 gegenüberliegenden Seitenfläche 63 wird von dieser elastischen Wandung 50 begrenzt. Die Scheitelkante 62 der Durchgangsöffnungen 61 der anderen Gruppe greift an der elastischen Wandung 50 der Klemmfläche 31 an. Damit wird die Klemmfläche 31 an diesen Stellen linienhaft abgestützt und damit versteift. Es greifen die Durchgangsöffnungen 61 beider Gruppen an der die Klemmfläche 31 aufweisenden elastischen Wandung 50 an.

Die Gitterstruktur aus den Wandungen 52 ist gegen Klemmrichtung k so bis zu einer weiteren Klemmfläche 31 des Klemmteils 3 weitergeführt, dass die Durchgangsöffnungen 61 beider Gruppen unter Ausbildung eines Quersteges 41 auch an einer hier mittigen elastischen Wandung 52 parallel zu der elastischen Wandung 50 mit der einen Klemmfläche 31 angreifen. Ferner wiederholt sich die Gitterstruktur zwischen der mittigen Klemmfläche 31 und der weiteren Wandung 52.

Zwischen den Stellen, an denen die Klemmfläche 31 über die Scheitelkante 32 der Durchgangsöffnungen 61 der anderen Gruppe angreift 31, ist die Klemmfläche 31 als Orientierungshilfe zum ordnungsgemäßen Einlegen der Versorgungsleitungen jeweils unter Ausbildung einer Aufnahmerille 36 gegen Klemmrichtung k gebogen ausgebildet.

Bei einer besonders bevorzugten Weiterbildung gemäß den FIGS. 6a-6d sind die sich mit einer Hauptkomponente in Klemmrichtung k erstreckenden inneren Wandungen 52 der Durchgangsöffnungen 61 bogenförmig ausgeführt ausgebildet. Hierdurch ergibt sich, wie den FIGS. 6a-6d entnehmbar, eine kraftmechanisch günstige tonnengewölbeartige bzw. spitzgewölbeartige Anordnung dieser Wandungen 52. Wegen der Kräftesymmetrie sind diese Wandungen 52 bezüglich der Querrichtung q paarweise angeordnet, wobei in jedem Paar jeweils gegenläufig gebogene Wandungen 52 vorgesehen sind.

Gemäß FIG. 5a-6a ist bezüglich der Querrichtung q beidendseitig eine sich über die Höhe h parallel zur Klemmrichtung k und über die Länge l des Klemmteils 3 erstreckende plattenartige Querverstrebung 7 vorgesehen. Durch diese Querverstrebung 7 ist einer Biegung um die Biegeachse parallel zur Querrichtung q ein erhöhtes Widerstandsmoment entgegensetzt.

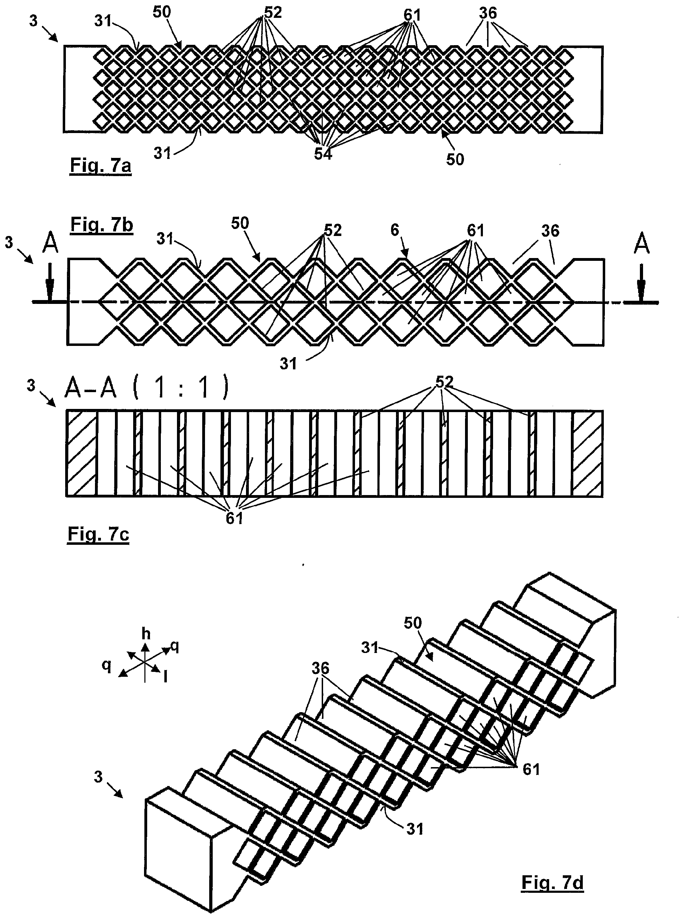

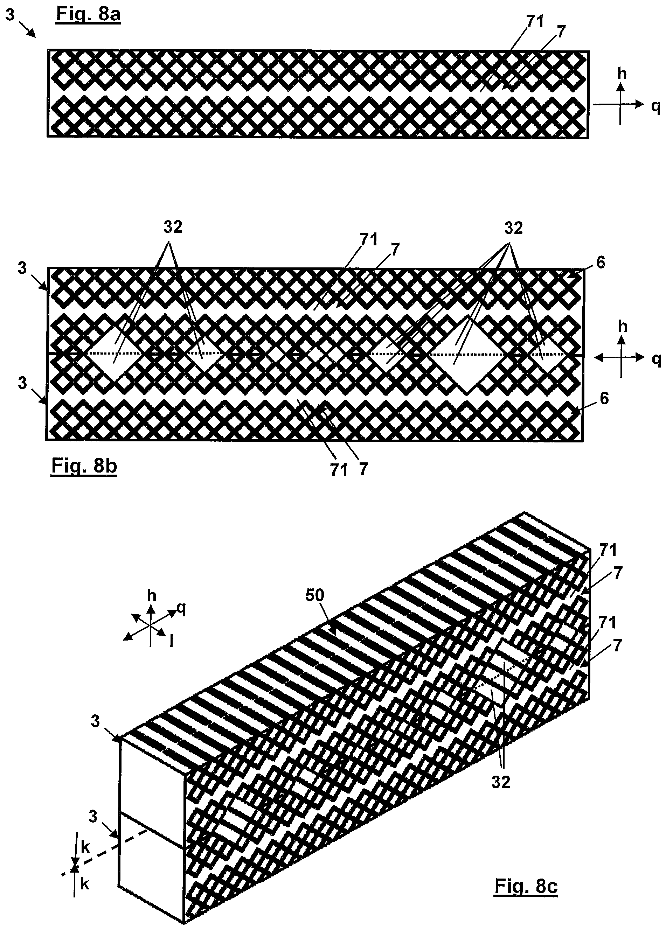

In den FIGS. 7a-7d und 8a-8c sind als Hohlraumstruktur 6 wabenartig aneinander angrenzenden Durchgangsöffnungen 61 mit einem rautenförmigen Querschnitt vorgesehen. Hierbei unterscheidet sich die Größe der Öffnungsquerschnitte bezüglich der FIGS. 7a und 7b beträchtlich, wobei die Hohlraumstruktur 6 mit größeren rautenförmigen Durchgangsöffnungen 31 federmechanisch weicher als die mit kleineren rautenförmigen Durchgangsöffnungen 31 ausgelegt ist. Ebenfalls sind infolge der wabenartigen Anordnung der Durchgangsöffnungen 61 an der Klemmfläche 31 hier V-förmige Aufnahmerillen 36 ausgebildet, die hier jeweils von zwei Durchgangsöffnungen 31 begrenzt werden.

In den FIGS. 9a-9c und 10a-10b sind weitere Variationen hinsichtlich der Form des Öffnungsquerschnittes der Durchgangsöffnungen 61 gezeigt. Diese sind hier aus Halbkreisen bzw. Vollkreisen aufgebaut, wobei die Durchgangsöffnungen 61 eine durch den Öffnungsquerschnitt definierte gerade zylindrische Form aufweisen. Die Durchgangsöffnungen 61 sind auch hier wabenartig angeordnet. Auch hier sind, durch die Querschnittsformen der Durchgangsöffnungen 61 bedingt, Aufnahmerillen 36 vorgesehen, wobei sich die Durchgangsöffnung 61 in Begrenzung der Aufnahmerillen 36 seitlich konvex (FIGS. 9a-9c) oder seitlich konkaven (FIG. 10a-10b) nach außen wölben.

In FIG. 11 weisen die Durchgangsöffnungen 61 einen quadratischen Öffnungsquerschnitt auf und sind bezüglich der Querrichtung nicht wabenförmig überlappend sondern aneinandergereiht angeordnet.

Beispielsweise dann, wenn sehr große Unterschiede in den Leitungsquerschnitten der Versorgungsleitungen V bei der Festlegung zu berücksichtigen sind, können, wie in FIGS. 8 a bis 8 c gezeigt, zusätzlich gegen Klemmrichtung k hier V-förmige Einschnitte in die Klemmfläche 31 vorgenommen werden. Da diese sind im Vergleich zu der Größe der Querschnittsfläche der Durchgangsöffnungen 61 der jeweiligen Ausführung der Zugentlastung 1 um ein Mehrfaches größer sind als eine oben beschriebene Aufnahmerille 36 sind, werden sie hier als Aufnahmerinne 32 bezeichnet. Diese Einschnitte sind entlang der flexiblen Wandungen 52 der begrenzenden Durchgangsöffnungen 61 durchgeführt, ohne eine der Durchgangsöffnungen 61 seitlich zu öffnen.

Zur Verstärkung einer ordnungsgemäßen Halterung der Klemmteile 3 in Einbaulage in der Klemmvorrichtung 2 ist, wie beispielgebend in der Ausführungsform der Zugentlastung 1 gemäß den FIGS. 6a-6c gezeigt, eine in den Haltebereich 34 vorgesehene mechanische Verbindung zwischen den gegeneinander gestapelten Klemmteilen 3 vorgesehen. Die mechanische Verbindung ist hier als Steckverbindung 8 mit einander angepassten Steckvorsprung 81 und Stecköffnung 82 ausgebildet. Hierbei erstreckt sich der Steckvorsprung 81 eines Klemmteils 3 in Einbaulage in Klemmrichtung k und greift formschlüssig in Klemmrichtung k in die ihm zugeordnete Stecköffnung 82 des zu dem Klemmteil 3 in Klemmrichtung k benachbarten Klemmteils 3 ein.

Die Zugentlastung 1 ist Teil eines in FIG. 2a und 2b dargestellten Endbefestigungsteils 9. Zum Anschluss an die Versorgungsleitungseinrichtung weist das Endbefestigungsteil 9 einen Verbindungsanschluss 91 auf, der, wie in der dargestellten Ausführungsform, für an sich bekannte Versorgungsleitungseinrichtung aus Kettengliedern mit Seitenlaschen ausgelegt ist. Daher sind zwei den Seitenlaschen angepasste und die Außenseite definierende Anschlussseitenlaschen 92 vorgesehen. Da diese Anschlussseitenlaschen 92 angepasst sind und somit auch andere Formen als die in FIG. 2b dargestellt Form aufweisen können, ist als äußeres Zeichen die in FIG. 2c sichtbare Anschlussseitenlasche 92 unter Fortlassung von Binnenkonturen gezeichnet.

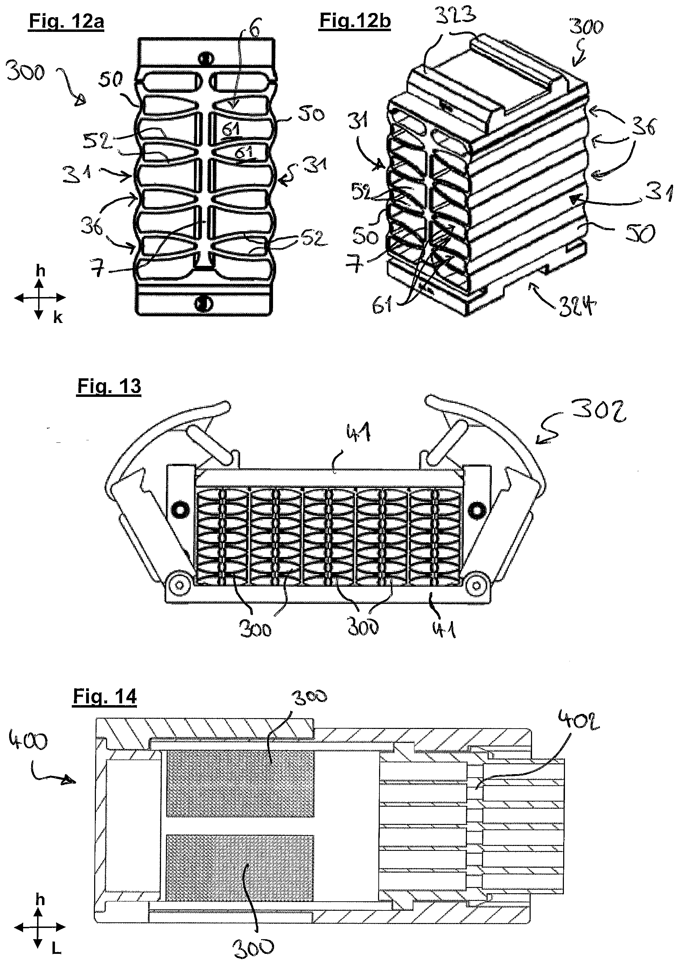

FIGS.12a-12b zeigen eine besonders bevorzugte Ausführungsform eines Klemmteils 300, das eine Geometrie der Hohlraumstruktur 6 und eine äußere elastische Wandung 50 mit gewelltem Verlauf, ähnlich wie in FIGS.6a-6d hat. Die innerer Wandungen 52 verlaufen insbesondere auch hier bogenförmig bzw. gekrümmt in der h,k-Ebene. Die Durchgangsöffnungen 61 des Klemmteils 300 nach FIGS.12a-12b sind zwischen zwei Paaren innerer Wandungen 52 jedoch zu den Einbuchtungen bzw. Aufnahmerillen 36 der äußeren Wandung 50 mit der Klemmfläche 31 aufgeweitet und zu einer mittigen Querverstrebung 7 hin verjüngt, in welche die inneren Wandungen übergehen. Die Querverstrebung 7 verläuft mittig in der Hauptebene des Klemmteils 300 und bildet die Symmetrieebene der spiegelsymmetrisch ausgeführten Wandungen 50, 52 bzw. beidseitigen Hohlraumstrukturen 6. Die äußeren Wandungen 50 bilden auch hier je eine Klemmfläche 31 zum Einklemmen von Versorgungsleitungen zwecks Zugentlastung in Längsrichtung l.

Auch hier bildet eine Anzahl innerer elastischer Wandungen 52, die mit der ersten elastischen Wandung 50 monolithisch bzw. einteilig hergestellt sind, ähnlich wie Zellwände die wabenartige Hohlraumstruktur 6, die zu beiden Frontseiten hin offen ist, insbesondere mit vollständig durchgehenden Durchgangsöffnungen 61.

Das Klemmteil 300 hat, wie aus FIG.12b ersichtlich an seinen zwei gegenüberliegenden Schmalseiten, die etwa senkrecht zu den äußeren Wandungen 50 liegen, bzw. kopf- und fuß-seitig, jeweils zwei Vorsprünge 323 bzw. eine Vertiefung 324 zur formschlüssigen Halterung in Rahmenteilen einer Klemmvorrichtung 302 (FIG.13) bzw. Querstegen 41 vorgesehen ist, welche in Klemmrichtung k d.h. quer zur Längsrichtung l verlaufen.

FIG.13 veranschaulicht die Verwendung mehrerer vertikal angeordneter Klemmteile 300 in einer Zugentlastung für mehreren Versorgungsleitungen an einer Energieführungskette. Die Zugentlastung aus FIG.13 umfasst eine Klemmvorrichtung 302 mit mehreren Rahmenteilen und einem Schnellverschluss, bezüglich deren Bauweise die Lehre aus DE 20 2017 102 147 zur Verkürzung hier ausdrücklich einbezogen wird. Die Klemmteile 300 sind mit den Vorsprüngen 323 bzw. Vertiefungen 324 formschlüssig in den profilartigen Querstegen 41 der Klemmvorrichtung 302 in Längsrichtung l gehalten. Leitungen können zwischen jeweils zwei Klemmteile 300 leicht von oben entnommen und eingefügt werden.

FIG.14 veranschaulicht das mehrteilige Gehäuse 400 eines Rechtecksteckverbinders mit mehreren Steckereinsätzen, an die verschiedene Leitungen angeschlossen sind (hier nicht gezeigt). Die Zugentlastung erfolgt in dem von den Steckereinsätzen abgewandten Innenraum des Gehäuses 400 durch zwei gegenüberliegend angeordnete Klemmteile 3; 300, z.B. gemäß FIGS.12a-12b oder FIGS.6a-6d, welche hier horizontal im Gehäuse 400 angeordnet und nur schematisch angedeutet sind.

### Bezugszeichenliste

- 1;1": Zugentlastung
- 2;2": Klemmvorrichtung
- 3; 3"; 300: Klemmteil
- 31; 31": Klemmfläche
- 32; 32": Aufnahmerinne
- 33: Klemmabschnitt
- 34: Haltebereich
- 35: Klemmbereich
- 36: Aufnahmerille
- 4; 4": Aufnahmerahmen
- 41; 41": Quersteg
- 50: äußere Wandung (mit Klemmfläche)
- 52: innere Wandung
- 54: Knotenlinie
- 6: Hohlraumstruktur
- 61: Durchgangsöffnung
- 62: Scheitelkante
- 63: Seitenfläche
- 7: Querverstrebung
- 71: Quersteg
- 72: Verdickung
- 8: Steckverbindung
- 81: Steckvorsprung
- 82: Stecköffnung
- 9: Endbefestigungsteil
- 91: Verbindungsanschluss
- 92: Anschlussseitenlasche
- 302: Klemmvorrichtung
- 323; 324: Halterung
- 400: Steckergehäuse
- 401: Steckereinsatz
- h: Höhenrichtung
- k: Klemmrichtung
- l: Längsrichtung
- q: Querrichtung
- V: Versorgungsleitung

## Patentansprüche

1. Klemmteil (3;3") für eine Klemmvorrichtung (2; 2") einer Zugentlastung (1; 1") für Versorgungsleitungen (V) einer Versorgungsleitungseinrichtung, wobei die Zugentlastung (1;1") zur Durchführung der Versorgungsleitungen (V) in einer Längsrichtung (l) ausgelegt ist;
wobei das Klemmteil (3;3") blockartig ist und eine als Klemmfläche (31;31") ausgebildete Seitenfläche (63) zum Einklemmen der Versorgungsleitungen (V) in einer Klemmrichtung (k) senkrecht oder etwa senkrecht zur Längsrichtung (l) gegen eine weitere Klemmfläche (31;31") der Klemmvorrichtung (2;2") aufweist, wobei die Klemmfläche (31) zumindest in einem zur Einklemmung der Versorgungsleitungen (V) vorgesehenen Klemmabschnitt (33) durch eine elastische Wandung (50) gebildet wird, wobei die elastische Wandung (50) auf der der Klemmfläche (31) abgewandten Seite eine sich in oder etwa in Längsrichtung (l) durch das Klemmteil (3) erstreckende Hohlraumstruktur (6) begrenzt, wobei die Hohlraumstruktur (6) durch mehrere in Längsrichtung (l) verlaufende Durchgangsöffnungen (61) definiert wird, von denen zumindest einige von der elastischen Wandung (50) begrenzt werden, wobei eine Mehrzahl Durchgangsöffnungen (61) der Hohlraumstruktur (6) über weitere innere elastische Wandungen (52) aneinander angrenzen.

2. Klemmteil (3;3") nach Anspruch 1, **dadurch gekennzeichnet, dass** die Wandstärke der elastischen Wandung (50) bzw. der elastischen Wandungen (52) kleiner/gleich als ein Drittel des durchschnittlichen Durchmessers, kleiner/gleich als ein Achtel des durchschnittlichen Durchmessers oder kleiner/gleich als ein Zehntel jeweils des durchschnittlichen Durchmessers der aneinander grenzenden Durchgangsöffnungen (61) ist.

3. Klemmteil (3;3") nach einem der Ansprüche 1 bis 2, **dadurch gekennzeichnet, dass** zumindest die der Klemmfläche (31) zugeordneten Durchgangsöffnungen (61) kongruent sind, wobei die Durchgangsöffnungen (61) vorzugsweise jeweils die Form eines geraden Prismas aufweisen, wobei insbesondere die Durchgangsöffnungen (61) wabenartig in zumindest zwei zueinander parallelen Reihen angeordnet sind.

4. Klemmteil (3;3") nach einem der Ansprüche 1 bis 3, insbesondere nach Anspruch 3, **dadurch gekennzeichnet, dass** die Durchgangsöffnungen (61) die Form eines geraden Prismas mit einer etwa dreieckigen Grundfläche und mit Scheitelkanten (62) aufweisen, wobei das Dreieck der Grundfläche bei einer Gruppe von Durchgangsöffnungen (61) mit einer Spitze gegen Klemmrichtung (k) und bei einer anderen Gruppe von Durchgangsöffnungen (61) mit einer Spitze in Klemmrichtung (k) weisend angeordnet ist, wobei insbesondere die Durchgangsöffnungen (61) der einen Gruppe jeweils mit der gegen Klemmrichtung (k) weisenden Spitze von der elastischen Wandung (50) mit der Klemmfläche (31) begrenzt werden, wobei vorzugsweise bezüglich einer Richtung senkrecht zur Längsrichtung (l) und Klemmrichtung (k), die Durchgangöffnungen (61) der einen Gruppe bezüglich der Richtung alternierend zu den Durchgangsöffnungen (61) der anderen Gruppe und/oder zueinander fluchtend angeordnet sind.

5. Klemmteil (3;3") nach einem der Ansprüche 1 bis 4, **dadurch gekennzeichnet, dass** in einem bezüglich der Längsrichtung (l) mittleren Bereich eine sich über eine Länge des Klemmteils (3) sowie sich senkrecht zur Längsrichtung (l) und Klemmrichtung (k) erstreckende Querverstrebung (7) vorgesehen ist und/oder **dass**, bezüglich einer Richtung senkrecht zur Längsrichtung (l) und Klemmrichtung (k), in einem mittleren und/oder endseitigem Bereich eine sich über die Länge des Klemmteils (3) und in Klemmrichtung (k) erstreckende Querverstrebung vorgesehen ist.

6. Klemmteil (3;3") nach einem der Ansprüche 1 bis 5, **dadurch gekennzeichnet, dass** das Klemmteil (3) eine weitere Klemmfläche (31) aufweist, die abgewandt zu der einen Klemmfläche (31) des Klemmteils (3) an demselben angeordnet ist, wobei das Klemmteil (3) vorzugsweise spiegelsymmetrisch zu einer Hauptachse ausgeführt ist.

7. Klemmteil (3;3") nach einem der Ansprüche 1 bis 6, **dadurch gekennzeichnet, dass** die Hohlraumstruktur (6) eine Vielzahl, insbesondere mindestens achtzehn, durch elastische Wandungen (50; 52) begrenzte Durchgangsöffnungen (61) aufweist, wobei die Durchgangsöffnungen (61) in mindestens zwei Reihen angeordnet sind, die jeweils in einer Querrichtung (q) quer zur Längsrichtung (l) und quer zur Klemmrichtung (k) verlaufen und/oder wobei der durchschnittliche Durchmesser der Durchgangsöffnungen (61) kleiner als 50% der Abmessung des Klemmteils in Klemmrichtung (k) ist.

8. Klemmteil (3; 300) nach Anspruch 1, wobei das Klemmteil einteilig aus elastischem Kunststoff hergestellt ist und zwei gegenüberliegende Seitenflächen (63) aufweist, die jeweils eine Klemmfläche (31) zum Einklemmen mindestens einer Versorgungsleitung (V) in einer Klemmrichtung (k) gegen eine weitere Klemmfläche (31;31") umfassen, wobei die weiteren elastischen Wandungen (52) eine gitterartige Anordnung aufweisen

9. Klemmteil (3; 300) nach Anspruch 8, **dadurch gekennzeichnet, dass** das Klemmteil bezüglich einer Hauptebene senkrecht zur Klemmrichtung (k) spiegelsymmetrisch ausgeführt ist und/oder in der Hauptebene eine sich über eine Hauptabmessung erstreckende Querverstrebung (7) aufweist, die einstückig mit der gitterartigen Anordnung der Wandungen (52) verbunden ist.

10. Klemmteil (3; 300) nach Anspruch 8 oder 9, **dadurch gekennzeichnet, dass** die Durchgangsöffnungen (61) sich zumindest überwiegend oder vollständig durchgehend in oder etwa in Längsrichtung (l) durch das Klemmteil (3) erstrecken, wobei die Hohlraumstruktur (6) wabenartig ausgeführt ist und die elastischen Wandungen (50; 52) Zellwände bilden, welche die Durchgangsöffnungen (61) senkrecht zur Längsrichtung (l) begrenzen.

11. Klemmteil (3; 300) nach einem der Ansprüche 8, 9 oder 10, **dadurch gekennzeichnet, dass** die gitterartige Anordnung paarweise angeordnete Wandungen (52) umfasst, wobei in jedem Paar gegenüberliegende Wandungen (52) jeweils gegenläufig gebogen sind, vorzugsweise mit einer zwischenliegenden Durchgangsöffnung (61), welche eine sich von der elastischen Wandung (50) weg zuspitzende Querschnittsform hat, wobei insbesondere die Wandungen (52) in jedem Paar an dem von der Klemmfläche (31) abgewandten Endbereich einteilig in die Querverstrebung (7) übergehen.

12. Klemmteil (3; 300) nach einem der Ansprüche 8 bis 11, **dadurch gekennzeichnet, dass** an zwei gegenüberliegenden Schmalseiten des Klemmteils, die senkrecht zu den Seitenflächen (63) liegen, jeweils mindestens ein Vorsprung (323) und/oder eine Vertiefung (324) zur formschlüssigen Halterung in einem Rahmen vorgesehen ist, wobei der Vorsprung und/oder die Vertiefung vorzugsweise in Klemmrichtung (k) bzw. quer zur Längsrichtung (l) verläuft.

13. Klemmteil (3; 300) nach einem der Ansprüche 8 bis 12, **dadurch gekennzeichnet, dass** die Hohlraumstruktur (6) eine Vielzahl, insbesondere mindestens achtzehn, durch elastische Wandungen (50; 52) begrenzte Durchgangsöffnungen (61) aufweist, wobei die Durchgangsöffnungen (61) vorzugsweise in mindestens zwei Reihen angeordnet sind, die jeweils in einer Querrichtung (q) quer zur Längsrichtung (l) und quer zur Klemmrichtung (k) verlaufen und/oder wobei der durchschnittliche Durchmesser der Durchgangsöffnungen (61) kleiner als 50% der Abmessung des Klemmteils in Klemmrichtung (k) ist.

14. Zugentlastung (1;1") für Versorgungsleitungen (V) einer Versorgungsleitungseinrichtung, wobei die Zugentlastung eine Klemmvorrichtung (2;2") mit mindestens einem Klemmteil nach einem der Ansprüche 1 bis 13 aufweist.

15. Zugentlastung (1) nach Anspruch 14, **dadurch gekennzeichnet, dass** mindestens ein weiteres baugleiches Klemmteil (3) vorgesehen ist, wobei die beiden Klemmteile (3) in Einbaulage in der Zugentlastung (1) mit ihren Klemmflächen (31) gegenüberliegend angeordnet sind.

16. Endbefestigungsteil (9) für eine Energieführungskette, wobei das Endbefestigungsteil eine Zugentlastung (1) nach einem der Ansprüche 14 bis 15 aufweist, wobei eine Anzahl Klemmteile in einem Rahmen gehalten sind, vorzugsweise in einer Ausrichtung mit im Wesentlichen senkrecht zur Klemmrichtung verlaufenden Klemmflächen (31), wobei das Endbefestigungsteil zum Anschluss an die Energieführungskette einen Verbindungsanschluss (91), wie zwei Seitenteile, insbesondere im Falle einer Versorgungsleitungseinrichtung aus Kettengliedern mit Seitenlaschen, zwei den Seitenlaschen angepasste Anschlussseitenlaschen (92) aufweist.

17. Energieführungskette mit einer Zugentlastung nach einem der Ansprüche 14 bis 15.

## Claims

1. Clamping part (3; 3") for a clamping device (2; 2") of a strain relief device (1; 1") for supply lines (V) of a supply line device, wherein the strain relief device (1; 1") is designed to pass through the supply lines (V) in a longitudinal direction (1);
the clamping part (3; 3") being block-like and having a side surface (63) designed as a clamping surface (31; 31") for clamping the supply lines (V) in a clamping direction (k) perpendicular or approximately perpendicular to the longitudinal direction (1) against a further clamping surface (31; 31") of the clamping device (2; 2"), the clamping surface (31) being formed by an elastic wall (50) at least in a clamping section (33) provided for clamping the supply lines (V), the elastic wall (50) delimiting, on the side facing away from the clamping surface (31), a cavity structure (6) extending in or approximately in the longitudinal direction (1) through the clamping part (3), the cavity structure (6) being defined by a plurality of through openings (61) extending in the longitudinal direction (1), at least some of which are bounded by the elastic wall (50), a plurality of through openings (61) of the cavity structure (6) being adjacent one another via further inner elastic walls (52).

2. Clamping part (3; 3") according to claim 1, **characterized in that** the wall thickness of the elastic wall (50) or the elastic walls (52) is less than/equal to one third of the average diameter, less than/equal to one eighth of the average diameter or less than/equal to one tenth in each case of the average diameter of the adjacent through openings (61) .

3. Clamping part (3; 3") according to any one of claims 1 to 2, **characterized in that** at least the through openings (61) assigned to the clamping surface (31) are congruent, the through openings (61) preferably each having the shape of a straight prism, in particular the through openings (61) being arranged in a honeycomb-like manner in at least two rows parallel to one another.

4. Clamping part (3; 3") according to any one of claims 1 to 3, in particular according to claim 3, **characterized in that** the through openings (61) have the shape of a straight prism with an approximately triangular base surface and with apex edges (62), the triangle of the base surface being arranged with a tip pointing in the clamping direction (k) in the case of one group of through openings (61) and with a tip pointing in the clamping direction (k) in the case of another group of through openings (61), wherein in particular the through openings (61) of the one group are in each case bounded by the elastic wall (50) with the clamping surface (31) with the tip pointing against the clamping direction (k), wherein preferably with respect to a direction perpendicular to the longitudinal direction (1) and clamping direction (k) the through openings (61) of the one group are arranged alternately to the through openings (61) of the other group and/or in alignment with each other regarding the direction.

5. Clamping part (3; 3") according to any one of claims 1 to 4, **characterized in that** a transverse strut (7) extending over the length of the clamping part (3) and perpendicular to the longitudinal direction (1) and clamping direction (k) is provided in a central region with respect to the longitudinal direction (1) and/or **in that** a transverse strut extending over the length of the clamping part (3) and in the clamping direction (k) is provided in a central and/or end region with respect to a direction perpendicular to the longitudinal direction (1) and clamping direction (k).

6. Clamping part (3; 3") according to any one of claims 1 to 5, **characterized in that** the clamping part (3) has a further clamping surface (31) which is arranged facing away from the one clamping surface (31) of the clamping part (3) on the same, the clamping part (3) preferably being of mirror-symmetrical design with respect to a main axis.

7. Clamping part (3; 3") according to any one of claims 1 to 6, **characterized in that** the cavity structure (6) has a plurality of, in particular at least eighteen, through openings (61) delimited by elastic walls (50; 52), the through openings (61) being arranged in at least two rows which each run in a transverse direction (q) transverse to the longitudinal direction (1) and transverse to the clamping direction (k) and/or the average diameter of the through openings (61) being smaller than 50% of the dimension of the clamping part in the clamping direction (k).

8. Clamping part (3; 300) according to claim 1, wherein the clamping part is manufactured in one piece from an elastic plastic material and has two opposing side surfaces (63) that each comprise a clamping surface (31) for clamping at least one supply line (V) in a clamping direction (k) against a further clamping surface (31; 31"), wherein the further elastic walls (52) have a grid-like arrangement.

9. Clamping part (3; 300) according to claim 8, **characterized in that** the clamping part is designed mirror-symmetrically with respect to a main plane perpendicular to the clamping direction (k) and/or has a transverse strut (7) in the main plane which extends over a main dimension and is integrally connected to the grid-like arrangement of the walls (52).

10. Clamping part (3; 300) according to claim 8 or 9, **characterized in that** the through openings (61) extend at least predominantly or completely continuously in or approximately in the longitudinal direction (1) through the clamping part (3), the cavity structure (6) being of honeycomb design and the elastic walls (50; 52) forming cell walls which delimit the through openings (61) perpendicular to the longitudinal direction (1).

11. Clamping part (3; 300) according to any one of claims 8, 9 or 10, **characterized in that** the grid-like arrangement comprises walls (52) arranged in pairs, wherein opposite walls (52) in each pair are each bent in opposite directions, preferably with an intermediate through opening (61) which has a cross-sectional shape tapering away from the elastic wall (50), wherein in particular the walls (52) in each pair merge integrally into the transverse strut (7) at the end region facing away from the clamping surface (31).

12. Clamping part (3; 300) according to any one of claims 8 to 11, **characterized in that** at least one projection (323) and/or one recess (324) is provided in each case on two opposite narrow sides of the clamping part which are perpendicular to the side faces (62), for positive retention in a frame, the projection and/or the recess preferably running in the clamping direction (k) or transversely to the longitudinal direction (1).

13. Clamping part (3; 300) according to any one of claims 8 to 12, **characterized in that** the cavity structure (6) has a plurality, in particular at least eighteen, through openings (61) delimited by elastic walls (50; 52), the through openings (61) preferably being arranged in at least two rows, each of which runs in a transverse direction (q) transverse to the longitudinal direction (1) and transverse to the clamping direction (k), and/or the average diameter of the through openings (61) being smaller than 50% of the dimensions of the clamping part in the clamping direction (k) .

14. Strain relief device (1; 1") for supply lines (V) of a supply line device, wherein the strain relief device comprises a clamping device (2; 2") with at least one clamping part according to any of claims 1 to 13.

15. Strain relief device (1; 1") according to claim 14, **characterized in that** at least one further clamping part (3) of identical construction is provided, the two clamping parts (3) being arranged with their clamping surfaces (31) opposite one another in the installation position in the strain relief device (1).

16. End fixing part (9) for an energy guiding chain, wherein the end fixing part has a strain relief device (1) according to any one of claims 14 to 15, wherein a number of clamping parts are held in a frame, preferably in an orientation with clamping surfaces (31) extending substantially perpendicular to the clamping direction, wherein the end fixing part for connection to the energy guiding chain comprises a connection link (91) such as two side parts, and particularly in the case of a supply line device made of chain links with side plates, two connection side plates (92) adapted to said side plates.

17. Energy guiding chain with a strain relief device according to any one of claims 14 to 15.

## Revendications

1. Élément de serrage (3; 3") pour un dispositif de serrage (2; 2") d'un dispositif de décharge de traction (1; 1") pour des conduites d'alimentation (V) d'un dispositif de conduite d'alimentation, le dispositif de décharge de traction (1; 1") étant conçu pour le passage des conduites d'alimentation (V) dans une direction longitudinale (1);
l'élément de serrage (3; 3") étant en forme de bloc et présentant une surface latérale (63) conçue comme surface de serrage (31; 31") pour serrer les lignes d'alimentation (V) dans une direction de serrage (k) perpendiculaire ou à peu près perpendiculaire à la direction longitudinale (1) contre une autre surface de serrage (31; 31") du dispositif de serrage (2; 2"), la surface de serrage (31) étant formée par une paroi élastique (50) au moins dans une section de serrage (33) prévue pour le serrage des lignes d'alimentation (V), la paroi élastique (50) délimitant, sur le côté détourné de la surface de serrage (31), une structure creuse (6) s'étendant dans ou à peu près dans la direction longitudinale (1) à travers l'élément de serrage (3), la structure de cavité (6) étant définie par plusieurs ouvertures de passage (61) s'étendant dans la direction longitudinale (1), dont au moins certaines sont délimitées par la paroi élastique (50), une pluralité d'ouvertures de passage (61) de la structure creuse (6) étant contiguës les unes aux autres par l'intermédiaire d'autres parois élastiques intérieures (52).

2. Élément de serrage (3; 3") selon la revendication 1, **caractérisé en ce que** l'épaisseur de paroi de la paroi élastique (50) ou des parois élastiques (52) est inférieure ou égale à un tiers du diamètre moyen, inférieure ou égale à un huitième du diamètre moyen ou inférieure ou égale à un dixième du diamètre moyen de chacune des ouvertures de passage (61) adjacentes.

3. Élément de serrage (3; 3") selon l'une quelconque des revendications 1 à 2, **caractérisé en ce qu'**au moins les ouvertures de passage (61) associées à la surface de serrage (31) sont congruentes, les ouvertures de passage (61) ayant de préférence chacune la forme d'un prisme droit, les ouvertures de passage (61) étant notamment disposées en nid d'abeille sur au moins deux rangées parallèles entre elles.

4. Élément de serrage (3; 3") selon l'une quelconque des revendications 1 à 3, notamment selon la revendication 3, **caractérisé en ce que** les ouvertures de passage (61) présentent la forme d'un prisme droit avec une surface de base à peu près triangulaire et avec des arêtes de sommet (62), le triangle de la surface de base étant disposé, pour un groupe d'ouvertures de passage (61), avec une pointe dirigée contre la direction de serrage (k) et, pour un autre groupe d'ouvertures de passage (61), avec une pointe dirigée dans la direction de serrage (k), les ouvertures de passage (61) de l'un des groupes étant notamment délimitées, chacune par la pointe dirigée contre la direction de serrage (k), par la paroi élastique (50) avec la surface de serrage (31)), les ouvertures de passage (61) de l'un des groupes étant de préférence disposées, par rapport à une direction perpendiculaire à la direction longitudinale (1) et à la direction de serrage (k), en alternance avec les ouvertures de passage (61) de l'autre groupe et/ou en alignement les unes avec les autres par rapport à la direction.

5. Élément de serrage (3; 3") selon l'une des revendications 1 à 4, **caractérisé en ce que,** dans une zone centrale par rapport à la direction longitudinale (1), il est prévu une entretoise transversale (7) s'étendant sur la longueur de l'élément de serrage (3) ainsi que perpendiculairement à la direction longitudinale (1) et à la direction de serrage (k) et/ou **en ce que**, par rapport à une direction perpendiculaire à la direction longitudinale (1) et à la direction de serrage (k), il est prévu dans une zone centrale et/ou d'extrémité une entretoise transversale s'étendant sur la longueur de l'élément de serrage (3) et dans la direction de serrage (k).

6. Élément de serrage (3; 3") selon l'une des revendications 1 à 5, **caractérisé en ce que** l'élément de serrage (3) présente une autre surface de serrage (31) qui est disposée sur la pièce de serrage (3) de manière détournée de l'une des surfaces de serrage (31) de l'élément de serrage (3), l'élément de serrage (3) étant réalisée de préférence avec une symétrie spéculaire par rapport à un axe principal.

7. Élément de serrage (3; 3") selon l'une des revendications 1 à 6, **caractérisé en ce que** la structure creuse (6) présente une pluralité, notamment au moins dix-huit, d'ouvertures de passage (61) délimitées par des parois élastiques (50; 52), les ouvertures de passage (61) étant disposées en au moins deux rangées qui s'étendent chacune dans une direction transversale (q) transversale à la direction longitudinale (1) et transversale à la direction de serrage (k) et/ou le diamètre moyen des ouvertures de passage (61) étant inférieur à 50% de la dimension de l'élément de serrage dans la direction de serrage (k).

8. Élément de serrage (3; 300) selon la revendication 1, dans laquelle la pièce de serrage est fabriquée d'une seule pièce en matière plastique élastique et présente deux surfaces latérales opposées (63) qui comprennent chacune une surface de serrage (31) pour serrer au moins une conduite d'alimentation (V) dans une direction de serrage (k) contre une autre surface de serrage (31; 31"), les autres parois élastiques (52) présentant un agencement en forme de grille.

9. Élément de serrage (3; 300) selon la revendication 8, **caractérisé en ce que** l'élément de serrage est réalisée avec une symétrie spéculaire par rapport à un plan principal perpendiculaire à la direction de serrage (k) et/ou présente dans le plan principal une entretoise transversale (7) s'étendant sur une dimension principale, qui est reliée d'un seul tenant à l'agencement en forme de grille des parois (52) .

10. Élément de serrage (3; 300) selon la revendication 8 ou 9, **caractérisé en ce que** les ouvertures de passage (61) s'étendent au moins principalement ou entièrement de manière continue dans ou à peu près dans la direction longitudinale (1) à travers l'élément de serrage (3), la structure creuse (6) étant réalisée sous forme de nid d'abeilles et les parois élastiques (50; 52) formant des parois cellulaires qui délimitent les ouvertures de passage (61) perpendiculairement à la direction longitudinale (1).

11. Élément de serrage (3; 300) selon l'une des revendications 8, 9 ou 10, **caractérisé en ce que** l'agencement en forme de grille comprend des parois (52) disposées par paires, des parois (52) opposées dans chaque paire étant respectivement courbées en sens inverse, de préférence avec une ouverture de passage (61) située entre elles, qui a une forme de section transversale s'effilant en s'éloignant de la paroi élastique (50), les parois (52) de chaque paire passant en particulier d'un seul tenant à l'entretoise transversale (7) dans la zone d'extrémité détournée de la surface de serrage (31).

12. Élément de serrage (3; 300) selon l'une des revendications 8 à 11, **caractérisé en ce que** sur deux petits côtés opposés de la pièce de serrage, qui sont perpendiculaires aux surfaces latérales (62), il est prévu respectivement au moins une saillie (323) et/ou un renfoncement (324) pour la fixation par complémentarité de forme dans un cadre, la saillie et/ou le renfoncement s'étendant de préférence dans la direction de serrage (k) ou transversalement à la direction longitudinale (1).

13. Élément de serrage (3; 300) selon l'une des revendications 8 à 12, **caractérisé en ce que** la structure creuse (6) présente une pluralité, en particulier au moins dix-huit, d'ouvertures de passage (61) délimitées par des parois élastiques (50; 52), les ouvertures de passage (61) étant de préférence disposées en au moins deux rangées qui s'étendent chacune dans une direction transversale (q) transversalement à la direction longitudinale (1) et transversalement à la direction de serrage (k) et/ou le diamètre moyen des ouvertures de passage (61) étant inférieur à 50% des dimensions de l'élément de serrage dans la direction de serrage (k).

14. Dispositif de décharge de traction (1; 1") pour des conduites d'alimentation (V) d'un dispositif de conduite d'alimentation, le dispositif de décharge de traction présentant un dispositif de serrage (2; 2") avec au moins un élément de serrage selon l'une des revendications 1 à 13.

15. Dispositif de décharge de traction (1; 1") selon la revendication 14, **caractérisé en ce qu'il** est prévu au moins un autre élément de serrage (3) de construction identique, les deux éléments de serrage (3) étant disposés avec leurs surfaces de serrage (31) opposées en position de montage dans le dispositif de décharge de traction (1).

16. Pièce de fixation d'extrémité (9) pour une chaîne de transport d'énergie, la pièce de fixation d'extrémité présentant un dispositif de décharge de traction (1) selon l'une des revendications 14 à 15, un certain nombre d'éléments de serrage étant maintenus dans un cadre, de préférence dans une orientation avec des surfaces de serrage (31) s'étendant sensiblement perpendiculairement à la direction de serrage, la pièce de fixation d'extrémité présentant, pour le raccordement à la chaîne de transport d'énergie, un raccord de connexion (91), tel que deux pièces latérales, en particulier dans le cas d'un dispositif de conduite d'alimentation constitué de maillons de chaîne avec des pattes latérales, deux pattes latérales de raccordement (92) adaptées aux pattes latérales.

17. Chaîne de transport d'énergie avec un dispositif de décharge de traction selon l'une des revendications 14 à 15.
